# EUROPEAN PATENT APPLICATION

(11) **EP 4 029 743 A1**
(43) Date of publication of application: **20.07.2022**
(21) Application number: 20872218.1
(22) Date of filing: 08.09.2020
(51) Int. Cl.: B60T 8/17, B60T 13/68, B60T 13/14

(54) **DISTRIBUTED BRAKING SYSTEM OF AUTOMOBILE, AUTOMOBILE, AND CONTROL METHOD FOR DISTRIBUTED BRAKING SYSTEM**

(30) Priority: 30.09.2019 CN 201910943569
(71) Applicant: Huawei Technologies Co., Ltd., Longgang Shenzhen, Guangdong 518129 (CN)
(72) Inventor: ZHANG, Yongsheng, Shenzhen, Guangdong 518129 (CN); WANG, Guangyi, Shenzhen, Guangdong 518129 (CN); ZHANG, Wei, Shenzhen, Guangdong 518129 (CN); LIU, Xiaokang, Shenzhen, Guangdong 518129 (CN)
(74) Representative: Thun, Clemens
(86) International application number: PCT/CN2020/113983
(87) International publication number: WO 2021/063158

(57) **Abstract**

A distributed braking system (100, 200, 300) for an automobile, an automobile (400), and a control method for the distributed braking system (100, 200, 300) are disclosed. A first control valve (17) is connected between a first brake circuit (111) and a second brake circuit (112), to connect brake circuits (111, 112) corresponding to pressurizing apparatuses (5, 6) belonging to a same group. When one of the two brake circuits (111, 112) fails, the first control valve (17) may be controlled to be in an open state, so that brake fluids in the two brake circuits (111, 112) can circulate, thereby helping improve redundancy performance of the distributed braking system (100, 200, 300).

## Description

This application claims priority to Chinese Patent Application No. 201910943569.4, filed with the China National Intellectual Property Administration on September 30, 2019 and entitled "DISTRIBUTED BRAKING SYSTEM IN AUTOMOBILE, AUTOMOBILE, AND CONTROL METHOD THEREFOR", which is incorporated herein by reference in its entirety.

### TECHNICAL FIELD

This application relates to the automobile field, and more specifically, to a distributed braking system in an automobile, an automobile, and a control method for a distributed braking system in an automobile.

### BACKGROUND

A braking system of an automobile is a system for applying specific braking forces to wheels of the automobile to exert a specific degree of forcible braking on the automobile. A braking system is intended to make a traveling automobile forcibly decelerate or even stop as required by a driver or a controller, or make a stopped automobile to park stably under various road conditions (for example, on a ramp), or make an automobile traveling downhill remain at a stable speed. With development of electric and intelligent automobiles, an automobile poses an increasingly high requirement on a braking system. With improvement on a level of self-driving, operating of a braking system is less dependent on a driver. To enable a vehicle to adapt to various complex driving environments, an increasingly high requirement is posed on precision for controlling a braking system. As a currently mainstream distributed braking system, a distributed electro-hydraulic braking system (Distributed Electro-hydraulic Braking System, DEHB) has relatively high controllability.

The DEHB usually includes four separate sets of pressurizing apparatuses to provide braking forces for four wheels respectively. Currently, there are two manners of dividing the four sets of pressurizing apparatuses into two groups. One is to group a pressurizing apparatus for a right front wheel of an automobile and a pressurizing apparatus for a left front wheel of the automobile into one group, and group a pressurizing apparatus for a right rear wheel of the automobile and a pressurizing apparatus for a left rear wheel of the automobile into one group, that is, an H-shaped layout manner. The other is to group the pressurizing apparatus for the right front wheel of the automobile and the pressurizing apparatus for the left rear wheel of the automobile into one group, and group the pressurizing apparatus for the right rear wheel of the automobile and the pressurizing apparatus for the left front wheel of the automobile into one group, that is, an X-shaped layout manner. To ensure stability of the automobile during braking, pressurizing apparatuses in each group need to be in a normal operating state at the same time. When a pressurizing apparatus fails, the other pressurizing apparatus in the same group is also shielded from the braking system even if the pressurizing apparatus can operate properly.

As described above, provided that two pressurizing apparatuses in a group fail, the other pressurizing apparatus belonging to the same group is also shielded, regardless of the X-shaped layout manner or the H-shaped layout manner. Therefore, the automobile loses half of its braking force due to a failure of a pressurizing apparatus. As a result, redundancy performance of the distributed braking system of the automobile is relatively low.

### SUMMARY

This application provides a distributed braking system in an automobile, an automobile, and a control method, to improve redundancy performance of a distributed braking system in an automobile.

According to a first aspect, a distributed braking system in an automobile is provided. The distributed braking system includes a first pressurizing apparatus (5), a second pressurizing apparatus (6), and a first control valve (17). The first pressurizing apparatus (5) is configured to adjust pressure of a brake fluid in a first brake circuit (111), to control a braking force applied to a first brake wheel cylinder (13) of the automobile. The second pressurizing apparatus (6) is configured to adjust pressure of a brake fluid in a second brake circuit (112), to control a braking force applied to a second brake wheel cylinder (14) of the automobile. The first control valve (17) connects the first brake circuit (111) to the second brake circuit (112). The first brake circuit (111) is connected to the second brake circuit (112) if the first control valve (17) is in an open state, or the first brake circuit (111) is disconnected from the second brake circuit (112) if the first control valve (17) is in a closed state. The first brake wheel cylinder (13) is a brake wheel cylinder for a right front wheel of the automobile, and the second brake wheel cylinder (14) is a brake wheel cylinder for a left front wheel of the automobile; or the first brake wheel cylinder (13) is a brake wheel cylinder for a right rear wheel of the automobile, and the second brake wheel cylinder (14) is a brake wheel cylinder for a left rear wheel of the automobile; or the first brake wheel cylinder (13) is a brake wheel cylinder for a right rear wheel of the automobile, and the second brake wheel cylinder (14) is a brake wheel cylinder for a left front wheel of the automobile; or the first brake wheel cylinder (13) is a brake wheel cylinder for a right front wheel of the automobile, and the second brake wheel cylinder (14) is a brake wheel cylinder for a left rear wheel of the automobile.

In this embodiment of this application, the first control valve (17) is connected between the first brake circuit (111) and the second brake circuit (112), to connect brake circuits corresponding to pressurizing apparatuses belonging to a same group. To be specific, the first brake circuit (111) is connected to the second brake circuit (112) when the first control valve (17) is in the open state. When one of the two brake circuits fails, the first control valve (17) may be controlled to be in the open state, so that the brake fluids in the two brake circuits can circulate. In this case, any one of the two pressurizing apparatuses belonging to the same group can provide braking forces for the two wheel cylinders of the automobile by using the two connected brake circuits, thereby helping improve redundancy performance of the distributed braking system. This avoids the following problem in a conventional distributed braking system: Brake circuits corresponding to brake wheel cylinders in an automobile are independent of each other. As a result, when a pressurizing apparatus fails, the other pressurizing apparatus in the same group is also shielded from the braking system even if the pressurizing apparatus can operate properly.

In a possible implementation, if the first control valve (17) is in the open state, the first pressurizing apparatus (5) is configured to adjust the pressure of the brake fluid in the first brake circuit (111), to adjust the pressure of the brake fluid in the second brake circuit (112); and/or if the first control valve is in the open state, the second pressurizing apparatus (6) is configured to adjust the pressure of the brake fluid in the first brake circuit (111), to adjust the pressure of the brake fluid in the second brake circuit (112).

In this embodiment of this application, when the first control valve (17) is in the open state, the first pressurizing apparatus (5) may control, through the connected first brake circuit (111) and second brake circuit (112), the braking force applied to the second brake wheel cylinder (14), thereby helping improve redundancy performance of the distributed braking system.

In addition, when the first control valve (17) is in the open state, the second pressurizing apparatus (5) may control, through the connected first brake circuit (111) and second brake circuit (112), the braking force applied to the first brake wheel cylinder (13), thereby helping improve redundancy performance of the distributed braking system.

In a possible implementation, the distributed braking system further includes a second control valve (19), a third pressurizing apparatus (7), and a fourth pressurizing apparatus (8). The third pressurizing apparatus (7) is configured to adjust pressure of a brake fluid in a third brake circuit (113), to control a braking force applied to a third brake wheel cylinder (15). The fourth pressurizing apparatus (8) is further configured to adjust pressure of a brake fluid in a fourth brake circuit (114), to control a braking force applied to a fourth brake wheel cylinder (16). The second control valve (19) connects the third brake circuit (113) to the fourth brake circuit (114). The third brake circuit (113) is connected to the fourth brake circuit (114) if the second control valve (19) is in an open state, or the third brake circuit (113) is disconnected from the fourth brake circuit (114) if the second control valve (19) is in a closed state. The third brake wheel cylinder (15), the fourth brake wheel cylinder (16), the first brake wheel cylinder (13), and the second brake wheel cylinder (14) are configured to provide braking forces for different wheels in the automobile. The third brake wheel cylinder (15) is a brake wheel cylinder for the right rear wheel of the automobile, and the fourth brake wheel cylinder (16) is a brake wheel cylinder for the left rear wheel of the automobile; or the third brake wheel cylinder (15) is a brake wheel cylinder for the right front wheel of the automobile, and the fourth brake wheel cylinder (16) is a brake wheel cylinder for the left front wheel of the automobile; or the third brake wheel cylinder (15) is a brake wheel cylinder for the right front wheel of the automobile, and the fourth brake wheel cylinder (16) is a brake wheel cylinder for the left rear wheel of the automobile; or the third brake wheel cylinder (15) is a brake wheel cylinder for the left front wheel of the automobile, and the fourth brake wheel cylinder (16) is a brake wheel cylinder for the right rear wheel of the automobile.

In this embodiment of this application, the second control valve (19) is connected between the third brake circuit (113) and the fourth brake circuit (114), to connect brake circuits corresponding to pressurizing apparatuses belonging to a same group. To be specific, the third brake circuit (113) is connected to the fourth brake circuit (114) when the second control valve (19) is in the open state. When one of the two brake circuits fails, the second control valve (19) may be controlled to be in the open state, so that the brake fluids in the two brake circuits can circulate. In this case, any one of the two pressurizing apparatuses belonging to the same group can provide braking forces for the two wheel cylinders of the automobile by using the two connected brake circuits, thereby helping improve redundancy performance of the distributed braking system.

In a possible implementation, if the second control valve (19) is in the open state, the third pressurizing apparatus (7) is configured to adjust the pressure of the brake fluid in the third brake circuit (113), to adjust the pressure of the brake fluid in the fourth brake circuit (114); and/or if the second control valve (19) is in the open state, the fourth pressurizing apparatus (8) is configured to adjust the pressure of the brake fluid in the fourth brake circuit (114), to adjust the pressure of the brake fluid in the third brake circuit (113).

In this embodiment of this application, when the second control valve (19) is in the open state, the third pressurizing apparatus (7) may control, through the connected third brake circuit (113) and fourth brake circuit (114), the braking force applied to the fourth brake wheel cylinder (16), thereby helping improve redundancy performance of the distributed braking system.

In addition, when the second control valve (19) is in the open state, the fourth pressurizing apparatus (8) may control, through the connected third brake circuit (113) and fourth brake circuit (114), the braking force applied to the third brake wheel cylinder (15), thereby helping improve redundancy performance of the distributed braking system.

In a possible implementation, the distributed braking system further includes a third control valve (18), a fifth brake circuit (115), and a sixth brake circuit (116). A pressure outlet of the fifth brake circuit (115) is connected to a pressure inlet of the first brake circuit (111). The pressure outlet of the fifth brake circuit (115) is connected to a pressure inlet of the second brake circuit (112). A pressure outlet of the sixth brake circuit (116) is connected to a pressure inlet of the third brake circuit (113). The pressure outlet of the sixth brake circuit (116) is connected to a pressure inlet of the fourth brake circuit (114). The third control valve (18) is configured to connect the second brake circuit (112) to the third brake circuit (113). The second brake circuit (112) is connected to the third brake circuit (113) if the third control valve (18) is in an open state, or the second brake circuit (112) is disconnected from the third brake circuit (113) if the third control valve (18) is in a closed state.

In this embodiment of this application, the third control valve (18) is connected between the second brake circuit (112) and the third brake circuit (113), to connect brake circuits corresponding to pressurizing apparatuses belonging to different groups. To be specific, the second brake circuit (112) is connected to the third brake circuit (113) when the third control valve (18) is in the open state. When one of the two brake circuits fails, the third control valve (18) may be controlled to be in the open state, so that the brake fluids in the two brake circuits can circulate. In this case, any one of the two pressurizing apparatuses belonging to different groups can provide braking forces for the two wheel cylinders of the automobile by using the two connected brake circuits, thereby helping improve redundancy performance of the distributed braking system.

In a possible implementation, the distributed braking system further includes a brake master cylinder (3). The brake master cylinder (3) is configured to adjust pressure of a brake fluid in the fifth brake circuit (115), to adjust the pressure of the brake fluid in the first brake circuit (111) or the second brake circuit (112). The brake master cylinder (3) is further configured to adjust pressure of a brake fluid in the sixth brake circuit (116), to adjust the pressure of the brake fluid in the third brake circuit (113) or the fourth brake circuit (114).

In this embodiment of this application, the distributed braking system may further implement a mechanical braking mode or a linear braking mode based on the brake master cylinder (3), the fifth brake circuit (115), and the sixth brake circuit (116), so that the distributed braking system can operate in a plurality of modes to improve diversity of braking forces provided by the braking system.

Optionally, the brake master cylinder (3) is a series dual-chamber brake master cylinder.

According to a second aspect, an automobile is provided. The automobile includes a first brake wheel cylinder (13), a second brake wheel cylinder (14), a first control valve (17), a first pressurizing apparatus (5), and a second pressurizing apparatus (6). The first pressurizing apparatus (5) is configured to adjust pressure of a brake fluid in a first brake circuit (111), to control a braking force applied to the first brake wheel cylinder (13). The second pressurizing apparatus (6) is configured to adjust pressure of a brake fluid in a second brake circuit (112), to control a braking force applied to the second brake wheel cylinder (14). The first control valve (17) connects the first brake circuit (111) to the second brake circuit (112). The first brake circuit (111) is connected to the second brake circuit (112) if the first control valve (17) is in an open state, or the first brake circuit (111) is disconnected from the second brake circuit (112) if the first control valve (17) is in a closed state. The first brake wheel cylinder (13) is a brake wheel cylinder for a right front wheel of the automobile, and the second brake wheel cylinder (14) is a brake wheel cylinder for a left front wheel of the automobile; or the first brake wheel cylinder (13) is a brake wheel cylinder for a right rear wheel of the automobile, and the second brake wheel cylinder (14) is a brake wheel cylinder for a left rear wheel of the automobile; or the first brake wheel cylinder (13) is a brake wheel cylinder for a right rear wheel of the automobile, and the second brake wheel cylinder (14) is a brake wheel cylinder for a left front wheel of the automobile; or the first brake wheel cylinder (13) is a brake wheel cylinder for a right front wheel of the automobile, and the second brake wheel cylinder (14) is a brake wheel cylinder for a left rear wheel of the automobile.

In this embodiment of this application, the first control valve (17) is connected between the first brake circuit (111) and the second brake circuit (112), to connect brake circuits corresponding to pressurizing apparatuses belonging to a same group. To be specific, the first brake circuit (111) is connected to the second brake circuit (112) when the first control valve (17) is in the open state. When one of the two brake circuits fails, the first control valve (17) may be controlled to be in the open state, so that the brake fluids in the two brake circuits can circulate. In this case, any one of the two pressurizing apparatuses belonging to the same group can provide braking forces for the two wheel cylinders of the automobile by using the two connected brake circuits, thereby helping improve redundancy performance of the distributed braking system. This avoids the following problem in a conventional distributed braking system: Brake circuits corresponding to brake wheel cylinders in an automobile are independent of each other. As a result, when a pressurizing apparatus fails, the other pressurizing apparatus in the same group is also shielded from the braking system even if the pressurizing apparatus can operate properly.

In a possible implementation, if the first control valve (17) is in the open state, the first pressurizing apparatus (5) is configured to adjust the pressure of the brake fluid in the first brake circuit (111), to adjust the pressure of the brake fluid in the second brake circuit (112); and/or if the first control valve is in the open state, the second pressurizing apparatus (6) is configured to adjust the pressure of the brake fluid in the first brake circuit (111), to adjust the pressure of the brake fluid in the second brake circuit (112).

In this embodiment of this application, when the first control valve (17) is in the open state, the first pressurizing apparatus (5) may control, through the connected first brake circuit (111) and second brake circuit (112), the braking force applied to the second brake wheel cylinder (14), thereby helping improve redundancy performance of the distributed braking system.

In addition, when the first control valve (17) is in the open state, the second pressurizing apparatus (5) may control, through the connected first brake circuit (111) and second brake circuit (112), the braking force applied to the first brake wheel cylinder (13), thereby helping improve redundancy performance of the distributed braking system.

In a possible implementation, the automobile further includes a second control valve (19), a third pressurizing apparatus (7), and a fourth pressurizing apparatus (8). The third pressurizing apparatus (7) is configured to adjust pressure of a brake fluid in a third brake circuit (113), to control a braking force applied to a third brake wheel cylinder (15). The fourth pressurizing apparatus (8) is further configured to adjust pressure of a brake fluid in a fourth brake circuit (114), to control a braking force applied to a fourth brake wheel cylinder (16). The second control valve (19) connects the third brake circuit (113) to the fourth brake circuit (114). The third brake circuit (113) is connected to the fourth brake circuit (114) if the second control valve (19) is in an open state, or the third brake circuit (113) is disconnected from the fourth brake circuit (114) if the second control valve (19) is in a closed state. The third brake wheel cylinder (15), the fourth brake wheel cylinder (16), the first brake wheel cylinder (13), and the second brake wheel cylinder (14) are configured to provide braking forces for different wheels in the automobile. The third brake wheel cylinder (15) is a brake wheel cylinder for the right rear wheel of the automobile, and the fourth brake wheel cylinder (16) is a brake wheel cylinder for the left rear wheel of the automobile; or the third brake wheel cylinder (15) is a brake wheel cylinder for the right front wheel of the automobile, and the fourth brake wheel cylinder (16) is a brake wheel cylinder for the left front wheel of the automobile; or the third brake wheel cylinder (15) is a brake wheel cylinder for the right front wheel of the automobile, and the fourth brake wheel cylinder (16) is a brake wheel cylinder for the left rear wheel of the automobile; or the third brake wheel cylinder (15) is a brake wheel cylinder for the left front wheel of the automobile, and the fourth brake wheel cylinder (16) is a brake wheel cylinder for the right rear wheel of the automobile.

In this embodiment of this application, the second control valve (19) is connected between the third brake circuit (113) and the fourth brake circuit (114), to connect brake circuits corresponding to pressurizing apparatuses belonging to a same group. To be specific, the third brake circuit (113) is connected to the fourth brake circuit (114) when the second control valve (19) is in the open state. When one of the two brake circuits fails, the second control valve (19) may be controlled to be in the open state, so that the brake fluids in the two brake circuits can circulate. In this case, any one of the two pressurizing apparatuses belonging to the same group can provide braking forces for the two wheel cylinders of the automobile by using the two connected brake circuits, thereby helping improve redundancy performance of the distributed braking system.

In a possible implementation, if the second control valve (19) is in the open state, the third pressurizing apparatus (7) is configured to adjust the pressure of the brake fluid in the third brake circuit (113), to adjust the pressure of the brake fluid in the fourth brake circuit (114); and/or if the second control valve (19) is in the open state, the fourth pressurizing apparatus (8) is configured to adjust the pressure of the brake fluid in the fourth brake circuit (114), to adjust the pressure of the brake fluid in the third brake circuit (113).

In this embodiment of this application, when the second control valve (19) is in the open state, the third pressurizing apparatus (7) may control, through the connected third brake circuit (113) and fourth brake circuit (114), the braking force applied to the fourth brake wheel cylinder (16), thereby helping improve redundancy performance of the distributed braking system.

In addition, when the second control valve (19) is in the open state, the fourth pressurizing apparatus (8) may control, through the connected third brake circuit (113) and fourth brake circuit (114), the braking force applied to the third brake wheel cylinder (15), thereby helping improve redundancy performance of the distributed braking system.

In a possible implementation, the distributed braking system further includes a third control valve (18), a fifth brake circuit (115), and a sixth brake circuit (116). A pressure outlet of the fifth brake circuit (115) is connected to a pressure inlet of the first brake circuit (111). The pressure outlet of the fifth brake circuit (115) is connected to a pressure inlet of the second brake circuit (112). A pressure outlet of the sixth brake circuit (116) is connected to a pressure inlet of the third brake circuit (113). The pressure outlet of the sixth brake circuit (116) is connected to a pressure inlet of the fourth brake circuit (114). The third control valve (18) is configured to connect the second brake circuit (112) to the third brake circuit (113). The second brake circuit (112) is connected to the third brake circuit (113) if the third control valve (18) is in an open state, or the second brake circuit (112) is disconnected from the third brake circuit (113) if the third control valve (18) is in a closed state.

In this embodiment of this application, the third control valve (18) is connected between the second brake circuit (112) and the third brake circuit (113), to connect brake circuits corresponding to pressurizing apparatuses belonging to different groups. To be specific, the second brake circuit (112) is connected to the third brake circuit (113) when the third control valve (18) is in the open state. When one of the two brake circuits fails, the third control valve (18) may be controlled to be in the open state, so that the brake fluids in the two brake circuits can circulate. In this case, any one of the two pressurizing apparatuses belonging to different groups can provide braking forces for the two wheel cylinders of the automobile by using the two connected brake circuits, thereby helping improve redundancy performance of the distributed braking system.

In a possible implementation, the automobile further includes a brake pedal (1), and the distributed braking system further includes a brake master cylinder (3). The brake pedal (1) is configured to receive a pedaling force input by a driver, and push a piston in the brake master cylinder (3) to produce displacement with respect to a cylinder body of the brake master cylinder (3). The brake master cylinder (3) is configured to: determine pressure of a brake fluid in the fifth brake circuit (115) based on the displacement; adjust the pressure of the brake fluid in the fifth brake circuit (115), to adjust the pressure of the brake fluid in the first brake circuit (111) or the second brake circuit (112); and adjust pressure of a brake fluid in the sixth brake circuit (116), to adjust the pressure of the brake fluid in the third brake circuit (113) or the fourth brake circuit (114).

In this embodiment of this application, the distributed braking system may further implement a mechanical braking mode or a linear braking mode based on the brake master cylinder (3), the fifth brake circuit (115), and the sixth brake circuit (116), so that the distributed braking system can operate in a plurality of modes to improve diversity of braking forces provided by the braking system.

Optionally, the brake master cylinder (3) is a series dual-chamber brake master cylinder.

According to a third aspect, a control method for a distributed braking system in an automobile is provided. The distributed braking system includes a controller, a first control valve (17), a first pressurizing apparatus (5), and a second pressurizing apparatus (6). The first pressurizing apparatus (5) is configured to adjust pressure of a brake fluid in a first brake circuit (111), to control a braking force applied to a first brake wheel cylinder (13) of the automobile. The second pressurizing apparatus (6) is configured to adjust pressure of a brake fluid in a second brake circuit (112), to control a braking force applied to a second brake wheel cylinder (14) of the automobile. The first control valve (17) connects the first brake circuit (111) to the second brake circuit (112). The first brake wheel cylinder (13) is a brake wheel cylinder for a right front wheel of the automobile, and the second brake wheel cylinder (14) is a brake wheel cylinder for a left front wheel of the automobile; or the first brake wheel cylinder (13) is a brake wheel cylinder for a right rear wheel of the automobile, and the second brake wheel cylinder (14) is a brake wheel cylinder for a left rear wheel of the automobile; or the first brake wheel cylinder (13) is a brake wheel cylinder for a right rear wheel of the automobile, and the second brake wheel cylinder (14) is a brake wheel cylinder for a left front wheel of the automobile; or the first brake wheel cylinder (13) is a brake wheel cylinder for a right front wheel of the automobile, and the second brake wheel cylinder (14) is a brake wheel cylinder for a left rear wheel of the automobile. The method includes: connecting the first brake circuit (111) to the second brake circuit (112) if the controller controls the first control valve (17) to be in an open state; or disconnecting the first brake circuit (111) from the second brake circuit (112) if the controller controls the first control valve (17) to be in a closed state.

In this embodiment of this application, the first control valve (17) is connected between the first brake circuit (111) and the second brake circuit (112), to connect brake circuits corresponding to pressurizing apparatuses belonging to a same group. To be specific, the first brake circuit (111) is connected to the second brake circuit (112) when the first control valve (17) is in the open state. When one of the two brake circuits fails, the first control valve (17) may be controlled to be in the open state, so that the brake fluids in the two brake circuits can circulate. In this case, any one of the two pressurizing apparatuses belonging to the same group can provide braking forces for the two wheel cylinders of the automobile by using the two connected brake circuits, thereby helping improve redundancy performance of the distributed braking system. This avoids the following problem in a conventional distributed braking system: Brake circuits corresponding to brake wheel cylinders in an automobile are independent of each other. As a result, when a pressurizing apparatus fails, the other pressurizing apparatus in the same group is also shielded from the braking system even if the pressurizing apparatus can operate properly.

In a possible implementation, the method further includes: The controller determines that the first pressurizing apparatus (5) or the second pressurizing apparatus (6) fails; and the controller controls the first control valve (17) to be in the open state.

In this embodiment of this application, when the first pressurizing apparatus (5) or the second pressurizing apparatus (6) fails, the first control valve (17) may be controlled to be in the open state. In this way, a pressurizing apparatus, of the first pressurizing apparatus (5) and the second pressurizing apparatus (6), that can operate properly may substitute for the failed pressurizing apparatus, and provide a braking force for the first brake wheel cylinder (13) and/or the second brake wheel cylinder (14) through the connected first brake circuit (111) and second brake circuit (112), thereby helping improve redundancy performance of the distributed braking system.

In a possible implementation, if the first control valve (17) is in the open state, the first pressurizing apparatus (5) is configured to adjust the pressure of the brake fluid in the first brake circuit (111), to adjust the pressure of the brake fluid in the second brake circuit (112); and/or if the first control valve is in the open state, the second pressurizing apparatus (6) is configured to adjust the pressure of the brake fluid in the first brake circuit (111), to adjust the pressure of the brake fluid in the second brake circuit (112).

In this embodiment of this application, when the first control valve (17) is in the open state, the first pressurizing apparatus (5) may control, through the connected first brake circuit (111) and second brake circuit (112), the braking force applied to the second brake wheel cylinder (14), thereby helping improve redundancy performance of the distributed braking system.

In addition, when the first control valve (17) is in the open state, the second pressurizing apparatus (5) may control, through the connected first brake circuit (111) and second brake circuit (112), the braking force applied to the first brake wheel cylinder (13), thereby helping improve redundancy performance of the distributed braking system.

In a possible implementation, the distributed braking system further includes a second control valve (19), a third pressurizing apparatus (7), and a fourth pressurizing apparatus (8). The third pressurizing apparatus (7) is configured to adjust pressure of a brake fluid in a third brake circuit (113), to control a braking force applied to a third brake wheel cylinder (15). The fourth pressurizing apparatus (8) is further configured to adjust pressure of a brake fluid in a fourth brake circuit (114), to control a braking force applied to a fourth brake wheel cylinder (16). The second control valve (19) connects the third brake circuit (113) to the fourth brake circuit (114). The third brake wheel cylinder (15), the fourth brake wheel cylinder (16), the first brake wheel cylinder (13), and the second brake wheel cylinder (14) are configured to provide braking forces for different wheels in the automobile. The third brake wheel cylinder (15) is a brake wheel cylinder for the right rear wheel of the automobile, and the fourth brake wheel cylinder (16) is a brake wheel cylinder for the left rear wheel of the automobile; or the third brake wheel cylinder (15) is a brake wheel cylinder for the right front wheel of the automobile, and the fourth brake wheel cylinder (16) is a brake wheel cylinder for the left front wheel of the automobile; or the third brake wheel cylinder (15) is a brake wheel cylinder for the right front wheel of the automobile, and the fourth brake wheel cylinder (16) is a brake wheel cylinder for the left rear wheel of the automobile; or the third brake wheel cylinder (15) is a brake wheel cylinder for the left front wheel of the automobile, and the fourth brake wheel cylinder (16) is a brake wheel cylinder for the right rear wheel of the automobile. The method further includes: connecting the third brake circuit (113) to the fourth brake circuit (114) if the controller controls the second control valve (19) to be in an open state; or disconnecting the third brake circuit (113) from the fourth brake circuit (114) if the controller controls the second control valve (19) to be in a closed state.

In this embodiment of this application, the second control valve (19) is connected between the third brake circuit (113) and the fourth brake circuit (114), to connect brake circuits corresponding to pressurizing apparatuses belonging to a same group. To be specific, the third brake circuit (113) is connected to the fourth brake circuit (114) when the second control valve (19) is in the open state. When one of the two brake circuits fails, the second control valve (19) may be controlled to be in the open state, so that the brake fluids in the two brake circuits can circulate. In this case, any one of the two pressurizing apparatuses belonging to the same group can provide braking forces for the two wheel cylinders of the automobile by using the two connected brake circuits, thereby helping improve redundancy performance of the distributed braking system.

In a possible implementation, the method includes: The controller determines that the third pressurizing apparatus (7) or the fourth pressurizing apparatus (8) fails; and the controller controls the second control valve (19) to be in the open state.

In this embodiment of this application, when the third pressurizing apparatus (7) or the fourth pressurizing apparatus (8) fails, the second control valve (19) may be controlled to be in the open state. In this way, a pressurizing apparatus, of the third pressurizing apparatus (7) and the fourth pressurizing apparatus (8), that can operate properly may substitute for the failed pressurizing apparatus, and provide a braking force for the third brake wheel cylinder (15) and/or the fourth brake wheel cylinder (16) through the connected third brake circuit (113) and fourth brake circuit (114), thereby helping improve redundancy performance of the distributed braking system.

In a possible implementation, if the second control valve (19) is in the open state, the third pressurizing apparatus (7) is configured to adjust the pressure of the brake fluid in the third brake circuit (113), to adjust the pressure of the brake fluid in the fourth brake circuit (114); and/or if the second control valve (19) is in the open state, the fourth pressurizing apparatus (8) is configured to adjust the pressure of the brake fluid in the fourth brake circuit (114), to adjust the pressure of the brake fluid in the third brake circuit (113).

In this embodiment of this application, when the second control valve (19) is in the open state, the third pressurizing apparatus (7) may control, through the connected third brake circuit (113) and fourth brake circuit (114), the braking force applied to the fourth brake wheel cylinder (16), thereby helping improve redundancy performance of the distributed braking system.

In addition, when the second control valve (19) is in the open state, the fourth pressurizing apparatus (8) may control, through the connected third brake circuit (113) and fourth brake circuit (114), the braking force applied to the third brake wheel cylinder (15), thereby helping improve redundancy performance of the distributed braking system.

In a possible implementation, the distributed braking system further includes a third control valve (18), a fifth brake circuit (115), and a sixth brake circuit (116). A pressure outlet of the fifth brake circuit (115) is connected to a pressure inlet of the first brake circuit (111). The pressure outlet of the fifth brake circuit (115) is connected to a pressure inlet of the second brake circuit (112). A pressure outlet of the sixth brake circuit (116) is connected to a pressure inlet of the third brake circuit (113). The pressure outlet of the sixth brake circuit (116) is connected to a pressure inlet of the fourth brake circuit (114). The third control valve (18) is configured to connect the second brake circuit (112) to the third brake circuit (113). The method further includes: connecting the second brake circuit (112) to the third brake circuit (113) if the controller controls the third control valve (18) to be in an open state; or disconnecting the second brake circuit (112) from the third brake circuit (113) if the controller controls the third control valve (18) to be in a closed state.

In this embodiment of this application, the third control valve (18) is connected between the second brake circuit (112) and the third brake circuit (113), to connect brake circuits corresponding to pressurizing apparatuses belonging to different groups. To be specific, the second brake circuit (112) is connected to the third brake circuit (113) when the third control valve (18) is in the open state. When one of the two brake circuits fails, the third control valve (18) may be controlled to be in the open state, so that the brake fluids in the two brake circuits can circulate. In this case, any one of the two pressurizing apparatuses belonging to different groups can provide braking forces for the two wheel cylinders of the automobile by using the two connected brake circuits, thereby helping improve redundancy performance of the distributed braking system.

In a possible implementation, the method further includes: The controller determines that the first pressurizing apparatus (5) and the second pressurizing apparatus (6) fail; and the controller controls the third control valve (18) to be in the open state.

In this embodiment of this application, when both the first pressurizing apparatus (5) and the second pressurizing apparatus (6) fail, the third control valve (18) may be controlled to be in the open state. In this way, a pressurizing apparatus, of the third pressurizing apparatus (7) and the fourth pressurizing apparatus (8), that can operate properly may substitute for the failed pressurizing apparatuses, and provide a braking force for the second brake wheel cylinder (14) through the connected second brake circuit (112) and third brake circuit (113), thereby helping improve redundancy performance of the distributed braking system.

In a possible implementation, the method further includes: If the first pressurizing apparatus (5) and the second pressurizing apparatus (6) fail, the controller controls the first control valve (17) to be in the open state, so that the first brake circuit (111) is connected to the second brake circuit (112).

In this embodiment of this application, when both the first pressurizing apparatus (5) and the second pressurizing apparatus (6) fail, the third control valve (18) and the first control valve (17) may be controlled to be in the open state. In this way, a pressurizing apparatus, of the third pressurizing apparatus (7) and the fourth pressurizing apparatus (8), that can operate properly may substitute for the failed pressurizing apparatuses, and provide a braking force for the first brake wheel cylinder (13) and/or the second brake wheel cylinder (14) through the connected second brake circuit (112) and third brake circuit (113), thereby helping improve redundancy performance of the distributed braking system.

In a possible implementation, the method further includes: The controller determines that the third pressurizing apparatus (7) and the fourth pressurizing apparatus (8) fail; and the controller controls the third control valve (18) to be in the open state, so that the second brake circuit (112) is connected to the third brake circuit (113).

In this embodiment of this application, when both the third pressurizing apparatus (7) and the fourth pressurizing apparatus (8) fail, the third control valve (18) may be controlled to be in the open state. In this way, a pressurizing apparatus, of the first pressurizing apparatus (5) and the second pressurizing apparatus (6), that can operate properly may substitute for the failed pressurizing apparatuses, and provide a braking force for the second brake wheel cylinder (14) through the connected second brake circuit (112) and third brake circuit (113), thereby helping improve redundancy performance of the distributed braking system.

In a possible implementation, the method further includes: If the third pressurizing apparatus (7) and the fourth pressurizing apparatus (8) fail, the controller controls the second control valve (19) to be in the open state, so that the third brake circuit (111) is connected to the fourth brake circuit (112).

In this embodiment of this application, when both the third pressurizing apparatus (7) and the fourth pressurizing apparatus (8) fail, the third control valve (18) and the second control valve (19) may be controlled to be in the open state. In this way, a pressurizing apparatus, of the first pressurizing apparatus (5) and the second pressurizing apparatus (6), that can operate properly may substitute for the failed pressurizing apparatuses, and provide a braking force for the second brake wheel cylinder (14) and/or the first brake wheel cylinder (13) through the connected second brake circuit (112) and third brake circuit (113), thereby helping improve redundancy performance of the distributed braking system.

In a possible implementation, the automobile further includes a brake master cylinder (3). The brake master cylinder (3) is configured to adjust pressure of a brake fluid in the fifth brake circuit (115), to adjust the pressure of the brake fluid in the first brake circuit (111) and/or the second brake circuit (112). The brake master cylinder (3) is further configured to adjust pressure of a brake fluid in the sixth brake circuit (116), to adjust the pressure of the brake fluid in the third brake circuit (113) and/or the fourth brake circuit (114).

In this embodiment of this application, the distributed braking system may further implement a mechanical braking mode or a linear braking mode based on the brake master cylinder (3), the fifth brake circuit (115), and the sixth brake circuit (116), so that the distributed braking system can operate in a plurality of modes to improve diversity of braking forces provided by the braking system.

Optionally, the brake master cylinder (3) is a series dual-chamber brake master cylinder.

According to a fourth aspect, a controller is provided. The controller may be an independent device, or may be a chip in a device. The controller may include a processing unit and a sending unit. When the controller is an independent device, the processing unit may be a processor, and the sending unit may be an input/output interface. The device may further include a storage unit. The storage unit may be a memory. The storage unit is configured to store instructions. The processing unit executes the instructions stored in the storage unit, so that the device performs the method in the third aspect. When the controller is a chip in a device, the processing unit may be a processor, and the sending unit may be a pin, a circuit, or the like. The processing unit executes instructions stored in a storage unit, so that the controller performs the method in the third aspect. The storage unit may be a storage unit (for example, a register or a cache) in the chip, or may be a storage unit (for example, a read-only memory or a random access memory) located outside the chip in a terminal device or network device.

In the fourth aspect, that a memory is coupled to a processor may be understood as that the memory is located in the processor, or the memory is located outside the processor, so that the memory is independent of the processor.

According to a fifth aspect, a computer program product is provided. The computer program product includes computer program code, and when the computer program code is run on a computer, the computer is enabled to perform the methods in the foregoing aspects.

It should be noted that some or all of the computer program code can be stored in a first storage medium. The first storage medium can be encapsulated with a processor, or encapsulated separately from a processor. This is not specifically limited in this embodiment of this application.

According to a sixth aspect, a computer-readable medium is provided. The computer-readable medium stores program code. When the computer program code is run on a computer, the computer is enabled to perform the methods in the foregoing aspects.

### BRIEF DESCRIPTION OF DRAWINGS

FIG. 1 is a schematic diagram of a distributed braking system 100 according to an embodiment of this application;
FIG. 2 is a schematic diagram of a distributed braking system 200 according to an embodiment of this application;
FIG. 3 is a schematic diagram of a distributed braking system 300 according to another embodiment of this application;
FIG. 4 is a schematic diagram of an automobile according to an embodiment of this application;
FIG. 5 is a schematic diagram of an operating mode of the distributed braking system 200 according to an embodiment of this application;
FIG. 6 is a schematic diagram of an operating mode of the distributed braking system 200 according to an embodiment of this application;
FIG. 7 is a schematic diagram of an operating mode of the distributed braking system 200 according to an embodiment of this application;
FIG. 8 is a schematic diagram of an operating mode of the distributed braking system 200 according to an embodiment of this application;
FIG. 9 is a schematic diagram of an operating mode of the distributed braking system 200 according to an embodiment of this application;
FIG. 10 is a schematic diagram of an operating mode of the distributed braking system 200 according to an embodiment of this application;
FIG. 11 is a schematic diagram of an operating mode of the distributed braking system 200 according to an embodiment of this application;
FIG. 12 is a schematic diagram of an operating mode of the distributed braking system 200 according to an embodiment of this application;
FIG. 13 is a schematic diagram of an operating mode of the distributed braking system 300 according to an embodiment of this application;
FIG. 14 is a schematic diagram of an operating mode of the distributed braking system 300 according to an embodiment of this application;
FIG. 15 is a schematic diagram of an operating mode of the distributed braking system 300 according to an embodiment of this application; and
FIG. 16 is a flowchart of a control method for a distributed braking system in an automobile according to an embodiment of this application.

### DESCRIPTION OF EMBODIMENTS

The following describes technical solutions of this application with reference to accompanying drawings.

In a conventional distributed braking system, as a popular braking system, a distributed electro-hydraulic braking system (Distributed Electro-hydraulic Braking System, DEHB) usually includes four separate sets of pressurizing apparatuses to provide braking forces for four wheels respectively. Currently, there are two manners of dividing the four sets of pressurizing apparatuses into two groups. One is to group a pressurizing apparatus for a right front wheel of an automobile and a pressurizing apparatus for a left front wheel of the automobile into one group, and group a pressurizing apparatus for a right rear wheel of the automobile and a pressurizing apparatus for a left rear wheel of the automobile into one group, that is, an H-shaped layout manner. The other is to group the pressurizing apparatus for the right front wheel of the automobile and the pressurizing apparatus for the left rear wheel of the automobile into one group, and group the pressurizing apparatus for the right rear wheel of the automobile and the pressurizing apparatus for the left front wheel of the automobile into one group, that is, an X-shaped layout manner. To ensure stability of the automobile during braking, pressurizing apparatuses in each group need to be in a normal operating state at the same time. When a pressurizing apparatus fails, the other pressurizing apparatus in the same group is also shielded from the braking system even if the pressurizing apparatus can operate properly.

As described above, provided that two pressurizing apparatuses in a group fail, the other pressurizing apparatus belonging to the same group is also shielded, regardless of the X-shaped layout manner or the H-shaped layout manner. Therefore, the automobile loses half of its braking force due to a failure of a pressurizing apparatus. As a result, redundancy performance of the distributed braking system of the automobile is relatively low.

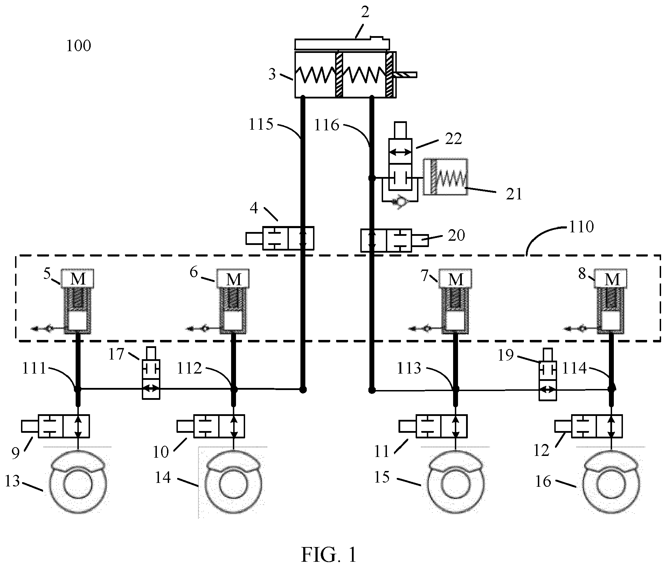

To improve redundancy performance of the distributed braking system, an embodiment of this application provides a new distributed braking system. To be specific, a first control valve (17) is used to connect brake circuits corresponding to pressurizing apparatuses belonging to a same group. When one of the two brake circuits fails, the first control valve (17) may be controlled to be in an open state, so that brake fluids in the two brake circuits can circulate. In this case, any one of the two pressurizing apparatuses belonging to the same group can provide braking forces for two wheel cylinders of an automobile by using the two connected brake circuits. Therefore, the first control valve (17) is also referred to as a "connection valve". The following describes the distributed braking system in this embodiment of this application with reference to FIG. 1.

It should be noted that terms such as a "pressure outlet" and a "pressure inlet" are used for ease of describing a connection relationship between various braking elements in the distributed braking system. The "pressure outlet" may be understood as a port through which a brake fluid flows out, and the "pressure inlet" may be understood as a port through which a brake fluid flows in. In other words, the "pressure outlet" and the "pressure inlet" may be understood as defining functions of a port. The "pressure outlet" and the "pressure inlet" may be configured to define functions of a physical port in different operating modes, or the "pressure outlet" and the "pressure inlet" may correspond to two different physical ports. This is not limited in the embodiments of this application.

Usually, that a pressure inlet of a device A is connected to a pressure outlet of a device B in the following descriptions may be understood as that the pressure inlet and the pressure outlet correspond to two physical ports, and is used to describe a connection relationship between the device A and the device B.

FIG. 1 is a schematic diagram of a distributed braking system 100 according to an embodiment of this application. The distributed braking system 100 shown in FIG. 1 includes a first pressurizing apparatus (5), a second pressurizing apparatus (6), and a first control valve (17).

The first pressurizing apparatus (5) is configured to adjust pressure of a brake fluid in a first brake circuit (111), to control a braking force applied to a first brake wheel cylinder (13) of an automobile.

A pressure outlet of the first pressurizing apparatus (5) is connected to a pressure inlet of the first brake circuit (111), and a pressure outlet of the first brake circuit (111) is connected to a pressure inlet of the first brake wheel cylinder (13). Correspondingly, the first pressurizing apparatus (5) may be configured to pressurize the brake fluid in the first brake circuit (111), to increase the braking force applied to the first brake wheel cylinder (13) of the automobile.

Optionally, the first pressurizing apparatus (5) includes a motor and a hydraulic cylinder. The motor is configured to drive a piston in the hydraulic cylinder to perform linear reciprocal motion, to pressurize the brake fluid in the first brake circuit (111).

The second pressurizing apparatus (6) is configured to adjust pressure of a brake fluid in a second brake circuit (112), to control a braking force applied to a second brake wheel cylinder (14) of the automobile.

A pressure outlet of the second pressurizing apparatus (6) is connected to a pressure inlet of the second brake circuit (112), and a pressure outlet of the second brake circuit (112) is connected to a pressure inlet of the second brake wheel cylinder (14). Correspondingly, the second pressurizing apparatus (6) may be configured to pressurize the brake fluid in the second brake circuit (112), to increase the braking force applied to the second brake wheel cylinder (14) of the automobile.

Optionally, the second pressurizing apparatus (6) includes a motor and a hydraulic cylinder. The motor is configured to drive a piston in the hydraulic cylinder to perform linear reciprocal motion, to pressurize the brake fluid in the second brake circuit (112).

The first control valve (17) connects the first brake circuit (111) to the second brake circuit (112). The first brake circuit (111) is connected to the second brake circuit (112) if the first control valve (17) is in an open state, or the first brake circuit (111) is disconnected from the second brake circuit (112) if the first control valve (17) is in a closed state.

When the first control valve (17) is in the open state, the first pressurizing apparatus (5) is configured to adjust the pressure of the brake fluid in the first brake circuit (111), to adjust the pressure of the brake fluid in the second brake circuit (112). In other words, the first pressurizing apparatus (5) may adjust the braking force for the second brake wheel cylinder (14) through the connected first brake circuit (111) and second brake circuit (112).

It should be noted that, in the distributed braking system 100 shown in FIG. 1, after the first control valve (17) is controlled to be in the open state, to prevent the brake fluid from flowing back to a brake master cylinder through a fifth brake circuit (115), an isolation valve (4) may be controlled to be in a closed state to prevent the brake fluid from flowing back through the fifth brake circuit (115).

When the first control valve (17) is in the open state, the second pressurizing apparatus (6) is configured to adjust the pressure of the brake fluid in the first brake circuit (111), to adjust the pressure of the brake fluid in the second brake circuit (112). In other words, the second pressurizing apparatus (6) may adjust the braking force for the first brake wheel cylinder (13) through the connected first brake circuit (111) and second brake circuit (112).

Correspondingly, that the first brake circuit (111) is disconnected from the second brake circuit (112) when the first control valve (17) is in the closed state may be understood as that the first brake circuit (111) and the second brake circuit (112) are two separate brake circuits. In this case, the brake fluids in the two brake circuits cannot mutually circulate and are blocked by the first control valve (17). Correspondingly, pressure of the brake fluids in the two brake circuits may be the same or different.

Optionally, the first brake wheel cylinder (13) and the second brake wheel cylinder (14) are brake wheel cylinders belonging to a same group in an H-shaped layout manner. To be specific, the first brake wheel cylinder (13) is a brake wheel cylinder for a right front wheel of the automobile, and the second brake wheel cylinder (14) is a brake wheel cylinder for a left front wheel of the automobile; or the first brake wheel cylinder (13) is a brake wheel cylinder for a right rear wheel of the automobile, and the second brake wheel cylinder (14) is a brake wheel cylinder for a left rear wheel of the automobile.

Optionally, the first brake wheel cylinder (13) and the second brake wheel cylinder (14) are brake wheel cylinders belonging to a same group in an X-shaped layout manner. To be specific, the first brake wheel cylinder (13) is a brake wheel cylinder for a right rear wheel of the automobile, and the second brake wheel cylinder (14) is a brake wheel cylinder for a left front wheel of the automobile; or the first brake wheel cylinder (13) is a brake wheel cylinder for a right front wheel of the automobile, and the second brake wheel cylinder (14) is a brake wheel cylinder for a left rear wheel of the automobile.

As described above, four sets of pressurizing apparatuses corresponding to four wheels are divided into two groups, regardless of the X-shaped layout or the H-shaped layout. One of the two groups is described above, and the other group is described below. It should be noted that, in this embodiment of this application, a connection manner in a conventional distributed braking system, or a connection manner that is provided in this application and that helps improve redundancy performance may be used for the other group. To be specific, a second control valve (19) is connected between a third brake circuit (113) controlled by a third pressurizing apparatus (7) and a fourth brake circuit (114) controlled by a fourth pressurizing apparatus (8).

For ease of differentiation, a group to which the first brake wheel cylinder (13) and the second brake wheel cylinder (14) belong is referred to as a "first group", and a group to which the third brake wheel cylinder (15) and the fourth brake wheel cylinder (16) belong is referred to as a "second group".

The third pressurizing apparatus (7) is configured to adjust pressure of a brake fluid in the third brake circuit (113), to control a braking force applied to the third brake wheel cylinder (15).

A pressure outlet of the third pressurizing apparatus (7) is connected to a pressure inlet of the third brake circuit (113), and a pressure outlet of the third brake circuit (113) is connected to a pressure inlet of the third brake wheel cylinder (15). Correspondingly, the third pressurizing apparatus (7) may be configured to pressurize the brake fluid in the third brake circuit (113), to increase the braking force applied to the third brake wheel cylinder (15) of the automobile.

Optionally, the third pressurizing apparatus (7) includes a motor and a hydraulic cylinder. The motor is configured to drive a piston in the hydraulic cylinder to perform linear reciprocal motion, to pressurize the brake fluid in the third brake circuit (113).

The fourth pressurizing apparatus (8) is further configured to adjust pressure of a brake fluid in the fourth brake circuit (114), to control a braking force applied to the fourth brake wheel cylinder (16).

A pressure outlet of the fourth pressurizing apparatus (8) is connected to a pressure inlet of the fourth brake circuit (114), and a pressure outlet of the fourth brake circuit (114) is connected to a pressure inlet of the fourth brake wheel cylinder (16). Correspondingly, the fourth pressurizing apparatus (8) may be configured to pressurize the brake fluid in the fourth brake circuit (114), to increase the braking force applied to the fourth brake wheel cylinder (16) of the automobile.

Optionally, the fourth pressurizing apparatus (8) includes a motor and a hydraulic cylinder. The motor is configured to drive a piston in the hydraulic cylinder to perform linear reciprocal motion, to pressurize the brake fluid in the fourth brake circuit (114).

The second control valve (19) connects the third brake circuit (113) to the fourth brake circuit (114). The third brake circuit (113) is connected to the fourth brake circuit (114) if the second control valve (19) is in an open state, or the third brake circuit (113) is disconnected from the fourth brake circuit (114) if the second control valve (19) is in a closed state.

If the second control valve (19) is in the open state, the third pressurizing apparatus (7) is configured to adjust the pressure of the brake fluid in the third brake circuit (113), to adjust the pressure of the brake fluid in the fourth brake circuit (114). In other words, the third pressurizing apparatus (7) may adjust the braking force for the fourth brake wheel cylinder (16) through the connected third brake circuit (113) and fourth brake circuit (114).

If the second control valve (19) is in the open state, the fourth pressurizing apparatus (8) is configured to adjust the pressure of the brake fluid in the fourth brake circuit (114), to adjust the pressure of the brake fluid in the third brake circuit (113). In other words, the fourth pressurizing apparatus (8) may adjust the braking force for the third brake wheel cylinder (15) through the connected third brake circuit (113) and fourth brake circuit (114).

Correspondingly, that the third brake circuit (113) is disconnected from the fourth brake circuit (114) when the second control valve (19) is in the closed state may be understood as that the third brake circuit (113) and the fourth brake circuit (114) are two separate brake circuits. In this case, the brake fluids in the two brake circuits cannot mutually circulate and are blocked by the second control valve (19). Correspondingly, pressure of the brake fluids in the two brake circuits may be the same or different.

Optionally, the third brake wheel cylinder (15) and the fourth brake wheel cylinder (16) are brake wheel cylinders belonging to a same group in the H-shaped layout manner, and belong to a group different from that of the first brake wheel cylinder (13) and the second brake wheel cylinder (14).

To be specific, the first brake wheel cylinder (13) is a brake wheel cylinder for the right front wheel of the automobile, and the second brake wheel cylinder (14) is a brake wheel cylinder for the left front wheel of the automobile. In this case, the third brake wheel cylinder (15) is a brake wheel cylinder for the right rear wheel of the automobile, and the fourth brake wheel cylinder (16) is a brake wheel cylinder for the left rear wheel of the automobile. Alternatively, the first brake wheel cylinder (13) is a brake wheel cylinder for the right rear wheel of the automobile, and the second brake wheel cylinder (14) is a brake wheel cylinder for the left rear wheel of the automobile. In this case, the third brake wheel cylinder (15) is a brake wheel cylinder for the right front wheel of the automobile, and the fourth brake wheel cylinder (16) is a brake wheel cylinder for the left front wheel of the automobile.

Optionally, the third brake wheel cylinder (15) and the fourth brake wheel cylinder (16) are brake wheel cylinders belonging to a same group in the X-shaped layout manner, and belong to a group different from that of the first brake wheel cylinder (13) and the second brake wheel cylinder (14).

To be specific, the first brake wheel cylinder (13) is a brake wheel cylinder for the right rear wheel of the automobile, and the second brake wheel cylinder (14) is a brake wheel cylinder for the left front wheel of the automobile. In this case, the third brake wheel cylinder (15) is a brake wheel cylinder for the right front wheel of the automobile, and the fourth brake wheel cylinder (16) is a brake wheel cylinder for the left rear wheel of the automobile. Alternatively, the first brake wheel cylinder (13) is a brake wheel cylinder for the right front wheel of the automobile, and the second brake wheel cylinder (14) is a brake wheel cylinder for the left rear wheel of the automobile. In this case, the third brake wheel cylinder (15) is a brake wheel cylinder for the right rear wheel of the automobile, and the fourth brake wheel cylinder (16) is a brake wheel cylinder for the left front wheel of the automobile.

Usually, to improve redundancy performance of the distributed braking system, the controller may control pressure that needs to be provided by each of the four pressurizing apparatuses (5, 6, 7, 8) for a brake fluid, and a driver may also press down a brake pedal, so that a brake fluid is input to the fifth brake circuit (115) through a first hydraulic cylinder (310) of the brake master cylinder (3), and a brake fluid is input to the sixth brake circuit (116) through a second hydraulic cylinder (311), to adjust the pressure of the brake fluid in each of the four brake circuits (111, 112, 113, 114).

However, in a conventional distributed braking system, a common operating mode is that isolation valves (4, 20) are controlled to be in a closed state and the brake circuits (111, 112) in the distributed braking system are independent of the brake circuits (113, 114) in the distributed braking system. This solution of providing braking forces for the four brake wheel cylinders (13, 14, 15, 16) through separate brake circuits may result in uneven pressure of the brake fluids in the brake circuits in the distributed braking system 100.

To avoid the foregoing problem, this application further provides a new braking system 200. To be specific, the second brake circuit (112) is connected to the third brake circuit (113), and a third control valve (18) is disposed. When the third control valve (18) is in an open state, the second brake circuit (112) is connected to the third brake circuit (113), so that pressure of the brake fluids in the two brake circuits can be equalized. When the third control valve (18) is in a closed state, the second brake circuit (112) is disconnected from the third brake circuit (113).

In addition, if the first pressurizing apparatus (5) and/or the second pressurizing apparatus (6) fail/fails, the third control valve (18) may also be controlled to be in the open state. In this way, the third pressurizing apparatus (7) and/or the fourth pressurizing apparatus (8) may substitute for the failed pressurizing apparatus, and provide a braking force for a corresponding brake wheel cylinder. Certainly, if the third pressurizing apparatus (7) and/or the fourth pressurizing apparatus (8) fail/fails, the third control valve (18) may also be controlled to be in the open state. In this way, the first pressurizing apparatus (5) and/or the second pressurizing apparatus (6) may substitute for the failed pressurizing apparatus, and provide a braking force for a corresponding brake wheel cylinder.

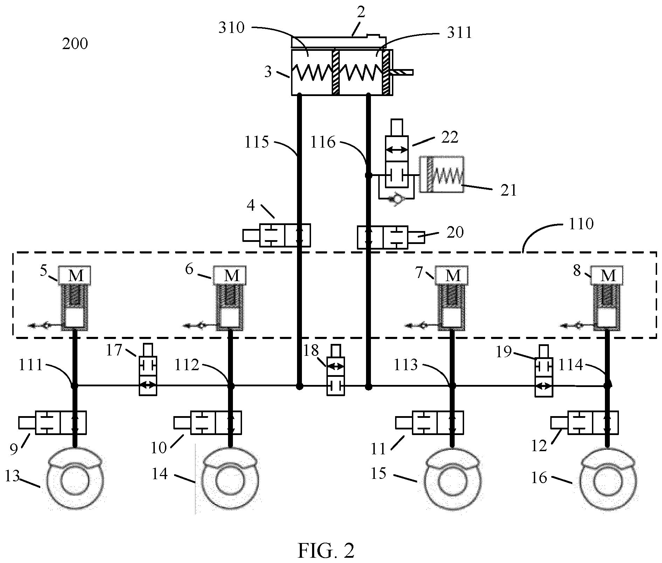

The following describes a schematic diagram of a distributed braking system 200 according to an embodiment of this application with reference to FIG. 2. The distributed braking system 200 shown in FIG. 2 includes the third control valve (18). It should be understood that same reference signs are used for elements with same functions in the distributed braking system 200 and the distributed braking system 100. For brevity, details are not described below again.

A pressure inlet of the fifth brake circuit (115) is connected to a pressure outlet of the first hydraulic cylinder (310) of the brake master cylinder (3). In other words, pressure of the brake fluid in the fifth brake circuit (115) may be provided by the first hydraulic cylinder (310) of the brake master cylinder (3).

Correspondingly, a pressure outlet of the fifth brake circuit (115) is connected to a pressure inlet of a first isolation valve (4), and the pressure inlet of the second brake circuit (112) is connected to a pressure outlet of the first isolation valve (4). When the first isolation valve (4) is in an open state, the pressure of the brake fluid in the second brake circuit (112) may be provided by the first hydraulic cylinder (310) of the brake master cylinder (3).

A pressure inlet of the sixth brake circuit (116) is connected to a pressure outlet of the second hydraulic cylinder (311) of the brake master cylinder (3). In other words, pressure of the brake fluid in the sixth brake circuit (116) may be provided by the second hydraulic cylinder (311) of the brake master cylinder (3).

Correspondingly, a pressure outlet of the sixth brake circuit (116) is connected to a pressure inlet of a second isolation valve (20), and the pressure inlet of the third brake circuit (113) is connected to a pressure outlet of the second isolation valve (20). When the second isolation valve (20) is in an open state, the pressure of the brake fluid in the third brake circuit (113) may be provided by the second hydraulic cylinder (311) of the brake master cylinder (3).

The third control valve (18) is configured to connect the second brake circuit (112) to the third brake circuit (113). The second brake circuit (112) is connected to the third brake circuit (113) if the third control valve (18) is in the open state, or the second brake circuit (112) is disconnected from the third brake circuit (113) if the third control valve (18) is in the closed state.

If the third control valve (18) is in the open state, the second pressurizing apparatus (6) may adjust the pressure of the brake fluid in the second brake circuit (112), to adjust the pressure of the brake fluid in the third brake circuit (113). In other words, the second pressurizing apparatus (6) may adjust the braking force for the third brake wheel cylinder (15) through the connected second brake circuit (112) and third brake circuit (113).

If the third control valve (18) is in the open state, the third pressurizing apparatus (7) is configured to adjust the pressure of the brake fluid in the third brake circuit (113), to adjust the pressure of the brake fluid in the second brake circuit (112). In other words, the third pressurizing apparatus (7) may adjust the braking force for the second brake wheel cylinder (14) through the connected second brake circuit (112) and third brake circuit (113).

Correspondingly, that the second brake circuit (112) is disconnected from the third brake circuit (113) when the third control valve (18) is in the closed state may be understood as that the second brake circuit (112) and the third brake circuit (113) are two separate brake circuits. In this case, the brake fluids in the two brake circuits cannot mutually circulate and are blocked by the third control valve (18). Correspondingly, pressure of the brake fluids in the two brake circuits may be the same or different.

It should be noted that the third control valve (18), the first control valve (17), and the second control valve (19) provided in this embodiment of this application each may be used in a braking system alone, or may be used in a distributed braking system in a combined manner (refer to FIG. 2). This is not limited in this embodiment of this application.

To improve redundancy performance of the distributed braking system, the distributed braking system may implement a braking function not only in a mechanical braking mode, but also in a brake-by-wire mode. In the mechanical braking mode, the brake master cylinder (3) provides braking forces for the four brake wheel cylinders (13, 14, 15, 16) through the fifth brake circuit (115) and the sixth brake circuit (116). In the brake-by-wire mode, after the driver presses down the brake pedal to input a required braking force to the braking system, the controller controls, based on the required braking force, the four pressurizing apparatuses (5, 6, 7, 8) to provide braking forces for the four brake wheel cylinders (13, 14, 15, 16). When one of the mechanical braking mode and the brake-by-wire mode fails, braking performance of the braking system can be maintained in the other mode.

In the mechanical braking mode, if the brake master cylinder (3) is a series dual-chamber brake master cylinder, because of a series structure of two chambers in the brake master cylinder (3), the pressure of the brake fluids in the brake system can be equalized even if the fifth control circuit (115) and the sixth control circuit (116) are separate brake circuits. In this case, the third control valve (18) does not need to be controlled to be in the open state to equalize the pressure of the brake fluids in the braking system.

In the brake-by-wire mode, the first isolation valve (4) on the fifth brake circuit (115) and the second isolation valve (20) on the sixth brake circuit (116) need to be set to a closed state. In this way, after the driver presses down the brake pedal to push a piston in the brake master cylinder (3) to produce displacement with respect to a cylinder body of the brake master cylinder (3), the brake fluids in the fifth brake circuit (115) and the sixth brake circuit (116) are blocked by the isolation valves (4, 20) and cannot flow into the four brake circuits (111, 112, 113, 114).

However, when a fourth control valve (22) is in an open state, the brake fluid in the sixth brake circuit (116) may be delivered to a pedal feel simulator (21) through the fourth control valve (22), to push a piston in the pedal feel simulator (21) to produce displacement with respect to a housing of the pedal feel simulator (21). In this case, the controller may determine the pressure of the brake fluid in the third brake circuit (113) by using the displacement of the piston in the pedal feel simulator (21), and control, based on the pressure of the brake fluid in the third brake circuit (113), the four pressurizing apparatuses (5, 6, 7, 8) to provide braking forces for the four brake wheel cylinders (13, 14, 15, 16).

It should be noted that, in the brake-by-wire mode, the controller may determine, based on the pedal feel simulator (21), a braking force required by the driver, or may determine, in another manner, a braking force required by the driver. For example, the braking force required by the driver may be determined based on a pedal stroke detected by a pedal stroke sensor. For another example, the braking force required by the driver may be determined based on pressure, detected by a pressure sensor, of a brake fluid at the pressure outlet of the brake master cylinder (3). This is not specifically limited in this embodiment of this application.

To improve reliability for controlling the braking system, inlet valves (9, 10, 11, 12) may be further disposed on one or more of the first brake circuit (111), the second brake circuit (112), the third brake circuit (113), and the fourth brake circuit (114). When the inlet valves (9, 10, 11, 12) are in an open state, a pressurizing apparatus on each brake circuit may deliver a brake fluid to a corresponding brake wheel cylinder. When the inlet valves (9, 10, 11, 12) are in a closed state, a pressurizing apparatus on each brake circuit cannot deliver a brake fluid to a corresponding brake wheel cylinder, and the brake fluid is blocked by the inlet valve on the brake circuit.

For example, a first inlet valve (9) is located on the first brake circuit (111) between the first pressurizing apparatus (5) and the first brake wheel cylinder (13). In other words, the pressure outlet of the first brake circuit (111) is connected to the pressure inlet of the first brake wheel cylinder (13) through the first inlet valve (9).

For another example, a second inlet valve (10) is located on the second brake circuit (112) between the second pressurizing apparatus (6) and the second brake wheel cylinder (13). In other words, the pressure outlet of the second brake circuit (112) is connected to the pressure inlet of the second brake wheel cylinder (14) through the second inlet valve (10).

For another example, a third inlet valve (11) is located on the third brake circuit (113) between the third pressurizing apparatus (7) and the third brake wheel cylinder (15). In other words, the pressure outlet of the third brake circuit (113) is connected to the pressure inlet of the third brake wheel cylinder (15) through the third inlet valve (11).

For another example, a fourth inlet valve (12) is located on the fourth brake circuit (114) between the fourth pressurizing apparatus (8) and the fourth brake wheel cylinder (16). In other words, the pressure outlet of the fourth brake circuit (114) is connected to the pressure inlet of the fourth brake wheel cylinder (16) through the fourth inlet valve (12).

It should be noted that the inlet valves (9, 10, 11, 12) define functions of control valves (9, 10, 11, 12). In some cases, the control valves (9, 10, 11, 12) may alternatively function as outlet valves. For example, when motors of the four pressurizing apparatuses (5, 6, 7, 8) rotate reversely, the brake fluids in the brake wheel cylinders may be drawn back to the corresponding pressurizing apparatuses through the four brake circuits (111, 112, 113, 114). In this case, the control valves (9, 10, 11, 12) may function as outlet valves.

Usually, for the distributed braking system, the braking forces on the brake wheel cylinders need to be reduced in some cases. In the distributed braking system 200 in this embodiment of this application, the foregoing depressurization function may be implemented by a pressurizing apparatus. For example, the pressurizing apparatus may include a motor (312) and a hydraulic cylinder (313). When the motor (312) of the pressurizing apparatus rotates forward, a piston in the hydraulic cylinder (313) may be pushed to move to press a brake fluid in the hydraulic cylinder (313) into a corresponding brake circuit, to pressurize a brake fluid in the brake circuit. When the motor (312) of the pressurizing apparatus rotates reversely, the piston in the hydraulic cylinder (313) may be pulled to move to draw brake fluids in a corresponding brake circuit and brake wheel cylinder back into the hydraulic cylinder (313), to depressurize the brake wheel cylinder.

Certainly, outlet valves (23, 24, 25, 26) may be alternatively disposed on the four brake circuits (111, 112, 113, 114). When the outlet valves are in an open state, the brake fluids in the four brake circuits (111, 112, 113, 114) may be delivered to a fluid storage apparatus (2) through an outlet circuit (117) for recycling. When the outlet valves are in a closed state, the brake fluids in the brake circuits cannot flow to the fluid storage apparatus (2).

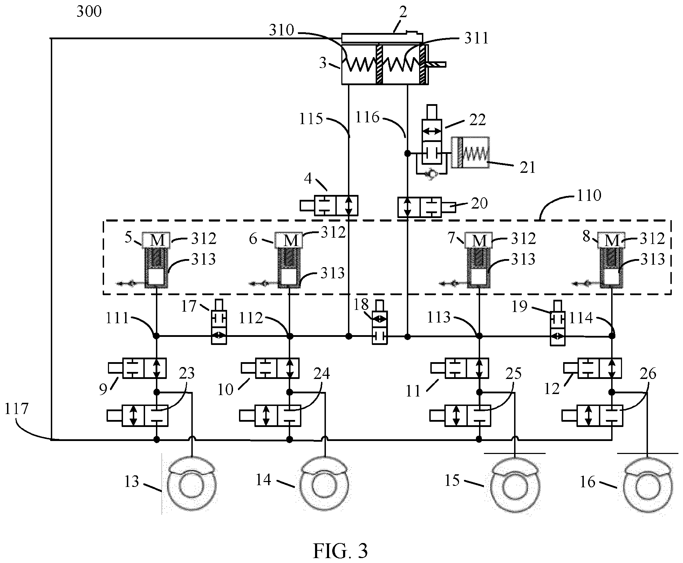

The following describes a distributed braking system with outlet valves with reference to FIG. 3. FIG. 3 is a schematic diagram of a distributed braking system 300 according to another embodiment of this application. It should be understood that same reference signs are used for elements with same functions in the distributed braking system 300 shown in FIG. 3 and the distributed braking system 200. For brevity, details are not described herein again.

As shown in FIG. 3, a first outlet valve (23) is disposed on the outlet circuit (117) between the pressure inlet of the first brake wheel cylinder (13) and the fluid storage apparatus (2). When the first outlet valve (23) is in an open state, the brake fluid in the first brake circuit (111) may flow to the outlet circuit (117) through the outlet valve (23) and finally flow into the fluid storage apparatus (2), to avoid pressurizing the first brake wheel cylinder (13) by the brake fluid. When the first outlet valve (23) is in a closed state, the brake fluid in the first brake circuit (111) cannot flow to the outlet circuit (117) through the first outlet valve (23).

A second outlet valve (24) is disposed on the outlet circuit (117) between the pressure inlet of the second brake wheel cylinder (14) and the fluid storage apparatus (2). When the second outlet valve (24) is in an open state, the brake fluid in the second brake circuit (112) may flow to the outlet circuit (117) through the second outlet valve (24) and finally flow into the fluid storage apparatus (2), to avoid pressurizing the second brake wheel cylinder (14) by the brake fluid. When the second outlet valve (24) is in a closed state, the brake fluid in the second brake circuit (112) cannot flow to the outlet circuit (117) through the second outlet valve (24).

A third outlet valve (25) is disposed on the outlet circuit (117) between the pressure inlet of the third brake wheel cylinder (15) and the fluid storage apparatus (2). When the third outlet valve (25) is in an open state, the brake fluid in the third brake circuit (113) may flow to the outlet circuit (117) through the third outlet valve (25) and finally flow into the fluid storage apparatus (2), to avoid pressurizing the third brake wheel cylinder (15) by the brake fluid. When the third outlet valve (25) is in a closed state, the brake fluid in the third brake circuit (113) cannot flow to the outlet circuit (117) through the third outlet valve (25).

A third outlet valve (26) is disposed on the outlet circuit (117) between the pressure inlet of the fourth brake wheel cylinder (16) and the fluid storage apparatus (2). When the fourth outlet valve (26) is in an open state, the brake fluid in the fourth brake circuit (112) may flow to the outlet circuit (117) through the fourth outlet valve (26) and finally flow into the fluid storage apparatus (2), to avoid pressurizing the fourth brake wheel cylinder (16) by the brake fluid. When the fourth outlet valve (26) is in a closed state, the brake fluid in the fourth brake circuit (114) cannot flow to the outlet circuit (117) through the fourth outlet valve (26).

Certainly, other outlet solutions may be alternatively used in the distributed braking system. For example, the outlet solution based on the reverse rotation of the motor (312) is combined with the outlet solution based on the outlet valves. This is not limited in this embodiment of this application.

Optionally, the control valves described above may be solenoid valves. To be specific, when no power is supplied to the solenoid valves, the solenoid valves are in default states, and after power is supplied to the solenoid valves, operating states (including an open state or a closed state) of the solenoid valves may be controlled by the controller. The following describes in detail a possible combination of the default states of the solenoid valves.

In the distributed braking system 100, the distributed braking system 200, and the distributed braking system 300, to reduce control of the controller on the operating states of the solenoid valves, usually, the first control valve (17) and the second control valve (19) are disposed as normally open valves, the third control valve (18) is disposed as a normally closed valve, the outlet valves (23, 24, 25, 26) are disposed as normally closed valves, the inlet valves (9, 10, 11, 12) are disposed as normally open valves, the isolation valves (4, 20) are disposed as normally open valves, and the fourth control valve (22) is disposed as a normally closed valve.

It should be noted that the default states of the solenoid valves may be understood as a possible configuration manner, and the default states of the solenoid valves are not specifically limited in this embodiment of this application.

In this embodiment of this application, the isolation valves (4, 20) are disposed as normally open valves, so that when a power supply function of the distributed braking system fails, the brake fluids in the fifth brake circuit (115) and the sixth brake circuit (116) can flow to the four brake wheel cylinders (13, 14, 15, 16), thereby helping improve reliability of the distributed braking system.

Any one of the distributed braking system 100, the distributed braking system 200, and the distributed braking system 300 may be used in an automobile alone. The following describes an automobile provided in an embodiment of this application by using an example in which the distributed braking system 200 is used in an automobile 400. It should be noted that same reference signs are used for elements with same functions in the automobile 400 and the distributed braking system 200. For brevity, details are not described below again.

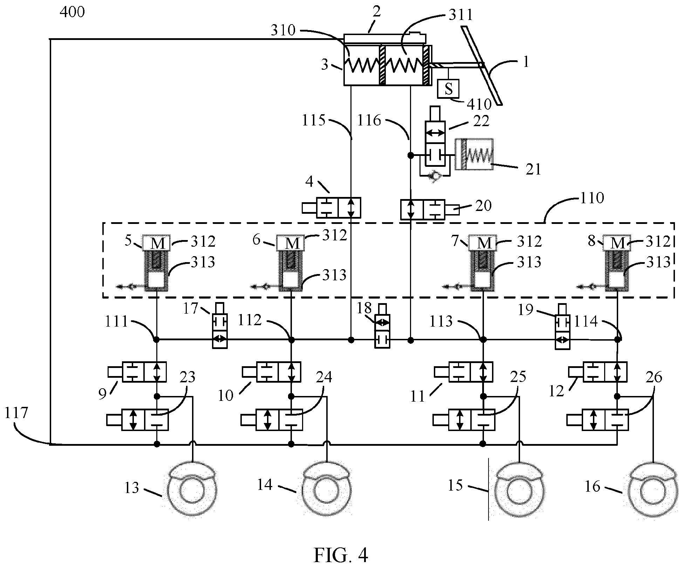

FIG. 4 is a schematic diagram of an automobile according to an embodiment of this application. The automobile 400 shown in FIG. 4 includes a brake pedal (1). When a driver presses down the brake pedal (1), the brake pedal (1) pushes the piston in the brake master cylinder (3) to move to press brake fluids in the first hydraulic cylinder (310) and the second hydraulic cylinder (311) into the fifth brake circuit (115) and the sixth brake circuit (116).

Optionally, the automobile 400 shown in FIG. 4 may further include a pedal stroke sensor (410). The pedal stroke sensor (410) is configured to detect displacement produced when the brake pedal (1) pushes the piston, in other words, relative displacement between the piston and the cylinder body of the brake master cylinder (3). The pedal stroke sensor (410) sends the detected displacement to the controller, and the controller controls the four pressurizing apparatuses (5, 6, 7, 8) to provide braking forces for the four brake wheel cylinders (13, 14, 15, 16).

It can be learned from the foregoing descriptions that the pedal stroke sensor (410) and the pedal feel simulator (21) can improve redundancy performance of the distributed braking system. For example, when the pedal stroke sensor (410) fails, the controller may control, based on feedback from the pedal feel simulator (21), the four pressurizing apparatuses (5, 6, 7, 8) to provide braking forces for the four brake wheel cylinders (13, 14, 15, 16).

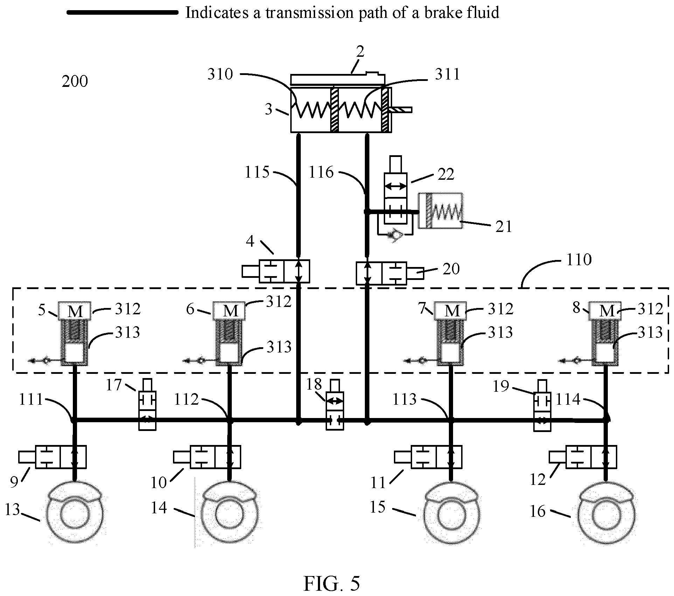

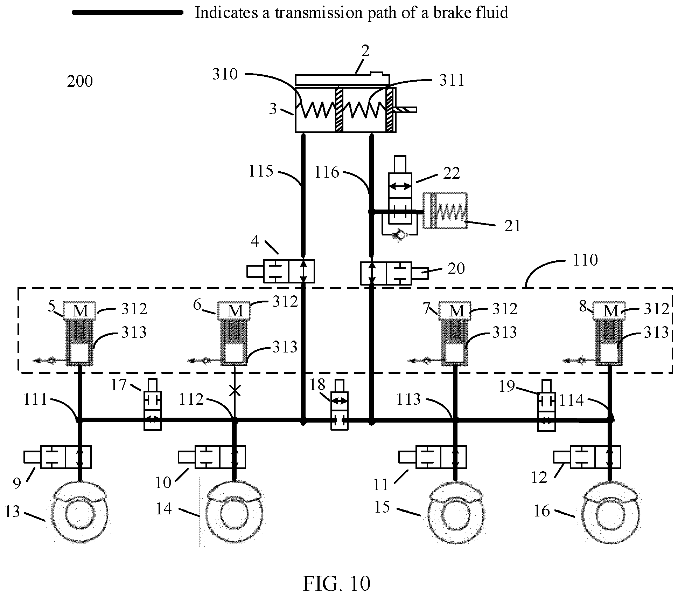

The foregoing describes architectures of the distributed braking system and the automobile in the embodiments of this application with reference to FIG. 1 to FIG. 4, and the following describes a plurality of operating modes of the distributed braking system with reference to FIG. 5 to FIG. 12. FIG. 5 to FIG. 9 describe a plurality of operating modes of the distributed braking system 200, and FIG. 10 to FIG. 12 describe a plurality of operating modes of the distributed braking system 300 in the embodiments of this application.

It is assumed that the default states of the control valves in the distributed braking system 200 are as follows: The first control valve (17) and the second control valve (19) are disposed as normally open valves, the third control valve (18) is disposed as a normally closed valve, the outlet valves (23, 24, 25, 26) are disposed as normally closed valves, the inlet valves (9, 10, 11, 12) are disposed as normally open valves, the isolation valves (4, 20) are disposed as normally open valves, and the fourth control valve (22) is disposed as a normally closed valve.

FIG. 5 is a schematic diagram of an operating mode of the distributed braking system 200 according to an embodiment of this application. FIG. 5 shows a flow path of a brake fluid during pressurization when the braking system 200 is in the brake-by-wire mode.

In the brake-by-wire mode, the controller controls the fourth control valve (22) to be in the open state, the isolation valves (4, 20) to be in the closed state, and all the remaining control valves to be in the default states.

When the driver presses down the brake pedal, the brake fluid in the brake master cylinder (3) flows into the pedal feel simulator (21) through the sixth brake circuit (116). Because the isolation valves (4, 20) are in the closed state, the brake fluid does not enter the brake wheel cylinders (13, 14, 15, 16) through the fifth brake circuit (115) and the sixth brake circuit (116), thereby implementing braking decoupling between the brake master cylinder (3) and the brake wheel cylinders (13, 14, 15, 16).

Correspondingly, the driver inputs a required braking force by pressing down the brake pedal, and the controller controls, based on the required braking force, the four pressurizing apparatuses (5, 6, 7, 8) to deliver brake fluids to the four brake wheel cylinders (13, 14, 15, 16) through the four brake circuits (111, 112, 113, 114), to generate braking forces for the wheels through the brake wheel cylinders and implement braking.

During braking, when pressure of the brake fluids in the brake circuits needs to be equalized, the controller may control the third control valve (18) to be in the open state, so that the brake fluids can flow between the second brake circuit (112) and the third brake circuit (113), and pressure of the brake fluids in the second brake circuit (112) and the third brake circuit (113) is equalized.

When strength for pressing down the brake pedal by the driver decreases or the driver does not fully release the brake pedal (the brake pedal is not shown in the figure), a braking requirement decreases. The controller may control, based on a pedal stroke detected by the pedal stroke sensor, motors (312) of the four pressurizing apparatuses (5, 6, 7, 8) to rotate reversely, to depressurize the braking system.

When the driver fully releases the brake pedal, on the one hand, the controller may control the motors (312) of the four pressurizing apparatuses (5, 6, 7, 8) to rotate reversely, to depressurize the braking system; and on the other hand, the controller may further control the isolation valves (4, 20) to be in the open state. In this case, due to a pressure difference, a part of the brake fluids in the brake wheel cylinders (13, 14, 15, 16) flows to the four pressurizing apparatuses (5, 6, 7, 8), and another part flows to the brake master cylinder (3) through the fifth brake circuit (115) and the sixth brake circuit (116). Finally, pressure of the brake fluids in the brake wheel cylinders is close to 0 or is 0.

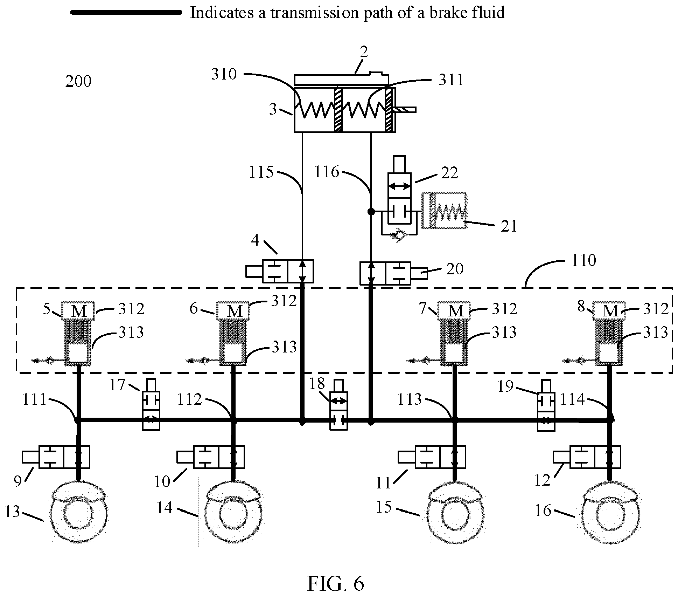

FIG. 6 is a schematic diagram of an operating mode of the distributed braking system 200 according to an embodiment of this application. FIG. 6 shows a flow path of a brake fluid during pressurization when the braking system 200 is in a self-driving mode. It should be noted that the flow path shown in FIG. 6 is similar to the flow path shown in FIG. 5. A main difference lies in that, in the brake-by-wire mode, operating of the braking system depends on an operation of the driver; however, in the self-driving mode, operating of the braking system may no longer depend on an operation of the driver.

In the self-driving mode, the controller controls the isolation valves (4, 20) to be in the closed state and all the remaining control valves to be in the default states.

In this case, operating of the braking system no longer requires participation of the driver. Therefore, a braking force requirement may be sent by an advanced driving assistant system (advanced driving assistant system, ADAS) to the controller by using an instruction.

After the ADAS informs the controller of the braking force requirement, the controller controls the four pressurizing apparatuses (5, 6, 7, 8) to deliver brake fluids to the four brake wheel cylinders (13, 14, 15, 16) through the four brake circuits (111, 112, 113, 114) respectively, to generate braking forces for the wheels through the brake wheel cylinders and implement braking.

During braking, when pressure of the brake fluids in the brake circuits needs to be equalized, the controller may control the third control valve (18) to be in the open state, so that the brake fluids can flow between the second brake circuit (112) and the third brake circuit (113), and pressure of the brake fluids in the second brake circuit (112) and the third brake circuit (113) is equalized.

When the ADAS informs the controller of a braking force decrease requirement or a braking force requirement is 0, the controller may control the motors (312) of the four pressurizing apparatuses (5, 6, 7, 8) to rotate reversely, to depressurize the braking system.

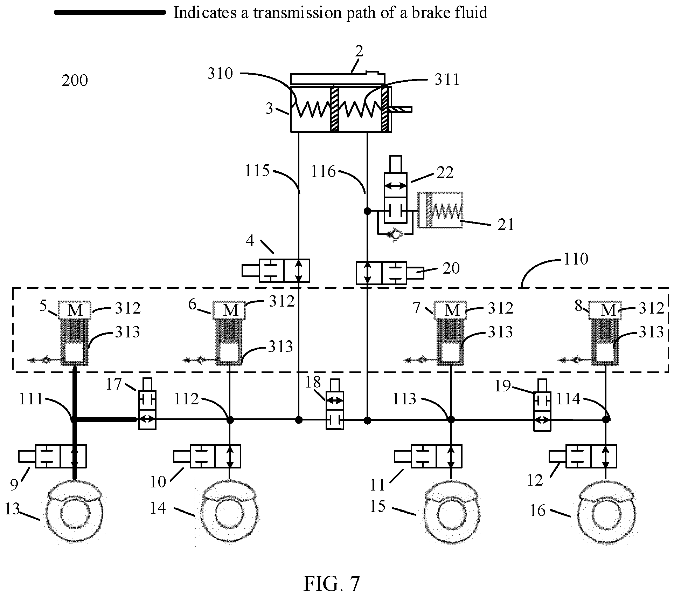

FIG. 7 is a schematic diagram of an operating mode of the distributed braking system 200 according to an embodiment of this application. FIG. 7 shows a flow path of a brake fluid during pressurization when the braking system 200 is in a single-wheel braking mode. The single-wheel braking mode may be used for functions such as electronic stability control (electronic stability control, ESC), an antilock brake system (antilock brake system, ABS), and a traction control system (traction control system, TCS).

After determining that the first brake wheel cylinder (13) needs to be pressurized, the controller controls the first control valve (17) to be in the closed state and the other control valves to be in the default states. The controller controls a motor (312) of the first pressurizing apparatus (5) to rotate forward to press a brake fluid into the first brake wheel cylinder (13) through the first brake circuit (111), to pressurize the first brake wheel cylinder (13).

After determining that the first brake wheel cylinder (13) needs to be depressurized, the controller controls the first control valve (17) to be in the closed state and the other control valves to be in the default states. The controller controls the motor (312) of the first pressurizing apparatus (5) to rotate reversely to draw the brake fluid from the first brake wheel cylinder (13) back to the first pressurizing apparatus (5) through the first brake circuit (111), to depressurize the first brake wheel cylinder (13).

It should be noted that the flow path shown in FIG. 7 is described by using an example of adjusting the braking force for the first brake wheel cylinder (13). Adjustment on the braking force for the fourth brake wheel cylinder (16) is similar, that is, the second control valve (19) is controlled to be in the closed state. For brevity, details are not described with reference to the accompanying drawings again.

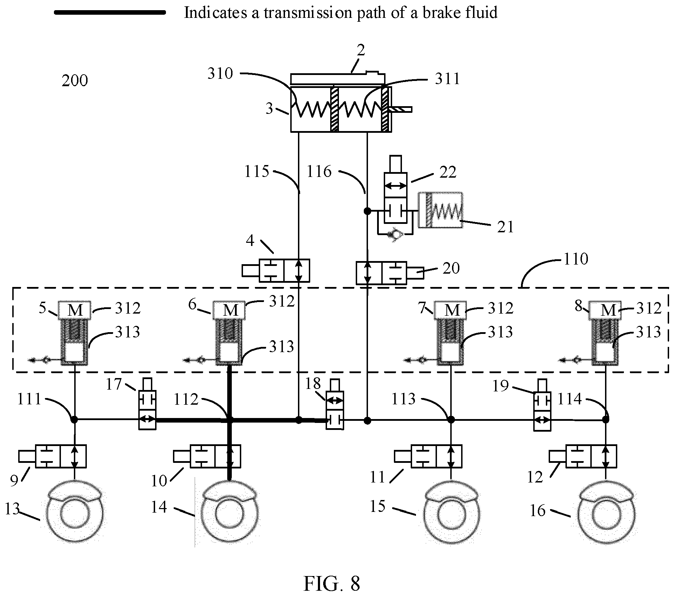

FIG. 8 is a schematic diagram of an operating mode of the distributed braking system 200 according to an embodiment of this application. FIG. 8 shows a flow path of a brake fluid during pressurization when the braking system 200 is in a single-wheel braking mode. The single-wheel braking mode may be used for functions such as ESC, an ABS, and a TCS.

After determining that the second brake wheel cylinder (14) needs to be pressurized, the controller controls the first control valve (17) and the isolation valve (4) to be in the closed state and the other control valves to be in the default states. The controller controls a motor (312) of the second pressurizing apparatus (6) to rotate forward to press a brake fluid into the second brake wheel cylinder (14) through the second brake circuit (112), to pressurize the second brake wheel cylinder (14).

After determining that the second brake wheel cylinder (14) needs to be depressurized, the controller controls the first control valve (17) and the isolation valve (4) to be in the closed state and the other control valves to be in the default states. The controller controls the motor (312) of the second pressurizing apparatus (6) to rotate reversely to draw the brake fluid from the second brake wheel cylinder (14) back to the second pressurizing apparatus (6) through the second brake circuit (112), to depressurize the second brake wheel cylinder (14).

It should be noted that the flow path shown in FIG. 8 is described by using an example of adjusting the braking force for the second brake wheel cylinder (14). Adjustment on the braking force for the third brake wheel cylinder (15) is similar, that is, the second control valve (19) and the isolation valve (20) are controlled to be in the closed state. For brevity, details are not described with reference to the accompanying drawings again.

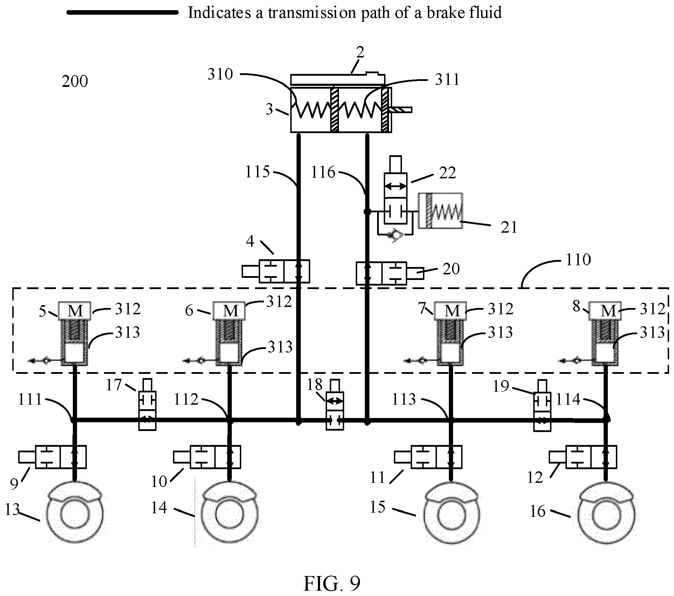

FIG. 9 is a schematic diagram of an operating mode of the distributed braking system 200 according to an embodiment of this application. FIG. 9 shows a flow path of a brake fluid during pressurization when the braking system 200 is in the mechanical braking mode.

In the mechanical braking mode, all the control valves in the braking system 200 are in the default states.

When the driver presses down the brake pedal, the brake fluid in the brake master cylinder (3) flows into the second brake circuit (112) and the first brake circuit (111) through the fifth brake circuit (115), and flows into the third brake circuit (113) and the fourth brake circuit (114) through the sixth brake circuit (116), to provide braking forces for the brake wheel cylinders (13, 14, 15, 16).

When strength for pressing down the brake pedal by the driver decreases or the driver does not fully release the brake pedal, a required braking force decreases, and the brake fluids in the four brake wheel cylinders (13, 14, 15, 16) flow back to the brake master cylinder (3) through the fifth brake circuit (115) and the sixth brake circuit (116) under an effect of a pressure difference.

When the driver fully releases the brake pedal, the brake master cylinder (3) is connected to the fluid storage apparatus (2), and the brake fluids in the four brake wheel cylinders (13, 14, 15, 16) finally flow back to the fluid storage apparatus (2).

It should be noted that the mechanical braking mode, the brake-by-wire mode, and the self-driving mode may be used in combination to improve redundancy performance of the distributed braking system 200. For example, when pressurization functions of all the pressurizing apparatuses in the distributed braking system 200 fail, the distributed braking system 200 may switch to the mechanical braking mode. For another example, when the driver expects to enter the self-driving mode, the distributed braking system 200 may switch from the mechanical braking mode to the self-driving mode.

The foregoing describes the four operating modes of the distributed braking system 200 with reference to FIG. 5 to FIG. 9: the brake-by-wire mode, the self-driving mode, the single-wheel braking mode, and the mechanical braking mode. In the distributed braking system 200 provided in this application, the distributed braking system 200 further has a special function of operating in a redundancy mode. To be specific, when only some of the four pressurizing apparatuses (5, 6, 7, 8) can operate properly, the controller may control the operating states of the control valves so that a pressurizing apparatus that can operate properly replaces a pressurizing apparatus that cannot operate properly.

With reference to FIG. 10 to FIG. 12, the following describes a solution in which the distributed braking system 200 operates in the foregoing operating modes in combination with the redundancy mode to improve redundancy performance of the distributed braking system 200.

FIG. 10 is a schematic diagram of an operating mode of the distributed braking system 200 according to an embodiment of this application. FIG. 10 shows a flow path of a brake fluid during pressurization of the second brake wheel cylinder (14) after the second pressurizing apparatus (6) fails when the braking system 200 is in the brake-by-wire mode. It should be noted that a principle for controlling operating states of elements in the distributed braking system 200 by the controller after another pressurizing apparatus in the distributed braking system 200 fails is similar to the principle described below. For brevity, details are not described again.

In the brake-by-wire mode, the controller controls the fourth control valve (22) to be in the open state, the isolation valves (4, 20) to be in the closed state, and the remaining control valves to be in the default states.

When the driver presses down the brake pedal, the brake fluid in the brake master cylinder (3) flows into the pedal feel simulator (21) through the sixth brake circuit (116). Because the isolation valves (4, 20) are in the closed state, the brake fluid in the brake master cylinder (3) does not enter the brake wheel cylinders, thereby decoupling the brake wheel cylinders from the brake master cylinder.

The controller detects that the second pressurizing apparatus (6) fails and cannot provide a braking force for the fourth brake wheel cylinder (14). In this case, if control is normally performed in the aforementioned brake-by-wire mode, pressurization speeds and capabilities of the brake wheel cylinders (13, 14) are likely to decrease. Therefore, the controller needs to control the third control valve (18) to be in the open state to use capabilities of the remaining pressurizing apparatuses (5, 7, 8) in an equalized manner, to improve reliability of the distributed braking system.

The controller determines a required braking force (or referred to as a "target braking force") by using a pedal stroke collected by the pedal stroke sensor (410). The controller controls, based on the required braking force, the properly operating pressurizing apparatuses (5, 7, 8) to deliver brake fluids to the brake wheel cylinders (13, 14, 15, 16) through the four brake circuits (111, 112, 113, 114), to provide braking forces for the brake wheel cylinders.

When strength for pressing down the brake pedal by the driver decreases or the driver does not fully release the brake pedal (the brake pedal is not shown in the figure), a braking requirement decreases. The controller obtains a pedal stroke by using the pedal stroke sensor (410). The controller determines a required braking force based on the pedal stroke. The controller controls motors (312) of the properly operating pressurizing apparatuses (5, 7, 8) to rotate reversely to reduce the braking forces for the brake wheel cylinders.

When the driver fully releases the brake pedal, on the one hand, the controller may control the motors (312) of the properly operating pressurizing apparatuses (5, 7, 8) to rotate reversely, to depressurize the braking system; and on the other hand, the controller may further control the isolation valves (4, 20) to be in the open state. In this case, due to a pressure difference, a part of the brake fluids in the brake wheel cylinders (13, 14, 15, 16) flows to the three pressurizing apparatuses (5, 7, 8), and another part flows to the brake master cylinder (3) through the fifth brake circuit (115) and the sixth brake circuit (116). Finally, pressure of the brake fluids in the brake wheel cylinders is close to 0 or is 0.

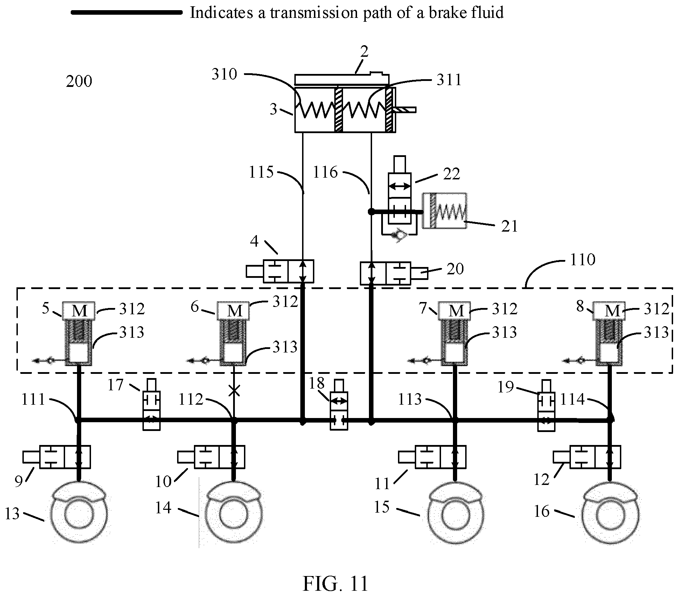

FIG. 11 is a schematic diagram of an operating mode of the distributed braking system 200 according to an embodiment of this application. FIG. 11 shows a flow path of a brake fluid during pressurization of the second brake wheel cylinder (14) after the second pressurizing apparatus (6) fails when the braking system 200 is in the self-driving mode. It should be noted that a principle for controlling operating states of elements in the distributed braking system 200 by the controller after another pressurizing apparatus in the distributed braking system 200 fails is similar to the principle described below. For brevity, details are not described again.

The flow path shown in FIG. 11 is similar to the flow path shown in FIG. 10. Amain difference lies in that, in the brake-by-wire mode, operating of the braking system depends on an operation of the driver; however, in the self-driving mode, operating of the braking system may no longer depend on an operation of the driver.

Assuming that the second pressurizing apparatus (6) fails, after the ADAS informs the controller of a braking force requirement, the controller controls the properly operating pressurizing apparatuses (5, 7, 8) to deliver brake fluids to the four brake wheel cylinders (13, 14, 15, 16) through the four brake circuits (111, 112, 113, 114) respectively, to generate braking forces for the wheels through the brake wheel cylinders and implement a braking function.

When the ADAS informs the controller of a braking force decrease requirement or a braking force requirement is 0, the controller may control the motors (312) of the properly operating pressurizing apparatuses (5, 7, 8) to rotate reversely, to depressurize the braking system.

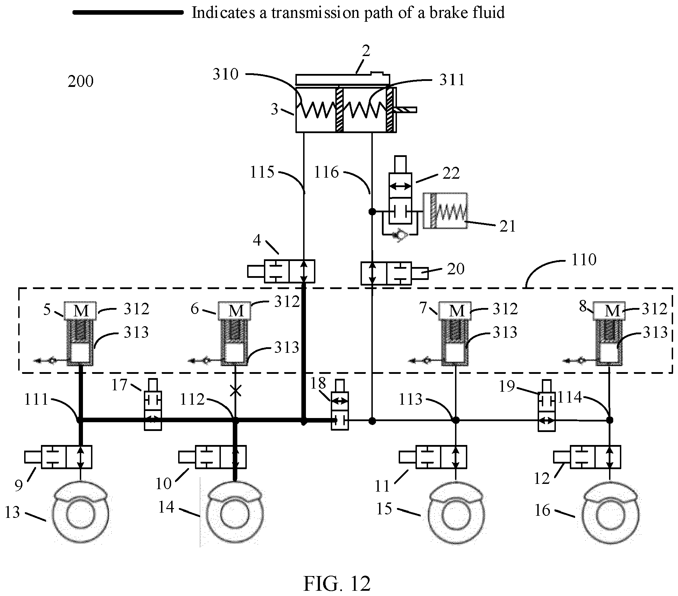

FIG. 12 is a schematic diagram of an operating mode of the distributed braking system 200 according to an embodiment of this application. FIG. 12 shows a flow path of a brake fluid during pressurization of the second brake wheel cylinder (14) after the second pressurizing apparatus (6) fails when the braking system 200 is in the self-driving mode. It should be noted that a principle for controlling operating states of elements in the distributed braking system 200 by the controller after another pressurizing apparatus in the distributed braking system 200 fails is similar to the principle described below. For brevity, details are not described again. The single-wheel braking mode may be used for functions such as ESC, an ABS, and a TCS.

It is assumed that, after determining that the first brake wheel cylinder (14) needs to be pressurized, the controller selects the first pressurizing apparatus (5) to replace the failed second pressurizing apparatus (6).

The controller controls the first inlet valve (9) to be in a closed state, the first isolation valve (4) to be in the closed state, and the other control valves to be in the default states.

The controller controls a motor (312) of the first pressurizing apparatus (5) to rotate forward to press a brake fluid into the second brake circuit (112) through the first brake circuit (111), and deliver the brake fluid to the second brake wheel cylinder (14) through the second brake circuit (112), to pressurize the second brake wheel cylinder (14). In this case, because the first inlet valve (9) is in the closed state, the brake fluid cannot flow into the first brake wheel cylinder (13) through the first brake circuit (111).

It is assumed that, after determining that the second brake wheel cylinder (14) needs to be depressurized, the controller controls the first inlet valve (9) to be in the closed state, the first isolation valve (4) to be in the closed state, and the other control valves to be in the default states.

The controller controls the motor (312) of the first pressurizing apparatus (5) to rotate reversely to draw the brake fluid from the second brake wheel cylinder (14) back to the first pressurizing apparatus (5) through the second brake circuit (112) and the first brake circuit (111), to depressurize the second brake wheel cylinder (14).

It should be noted that the flow path shown in FIG. 12 is described by using an example of adjusting the braking force for the second brake wheel cylinder (14). When the fourth pressurizing apparatus (8) fails, the braking force for the third brake wheel cylinder (16) may be controlled by the third pressurizing apparatus (7), and a specific adjustment principle is similar to the principle in the foregoing descriptions. To be specific, the third inlet valve (11) is controlled to be in a closed state, the second isolation valve (20) is controlled to be in the closed state, and the braking force for the fourth brake wheel cylinder (16) is controlled by the third pressurizing apparatus (7).

When the first pressurizing apparatus (5) fails, the braking force for the first brake wheel cylinder (13) may be controlled by the second pressurizing apparatus (6), and a specific adjustment principle is similar to the principle in the foregoing descriptions. To be specific, the second inlet valve (10) is controlled to be in a closed state, the first isolation valve (4) is controlled to be in the closed state, and the braking force for the fourth brake wheel cylinder (14) is controlled by the first pressurizing apparatus (7).

When the third pressurizing apparatus (7) fails, the braking force for the third brake wheel cylinder (15) may be controlled by the fourth pressurizing apparatus (8), and a specific adjustment principle is similar to the principle in the foregoing descriptions. To be specific, the fourth inlet valve (12) is controlled to be in a closed state, the second isolation valve (20) is controlled to be in the closed state, and the braking force for the third brake wheel cylinder (15) is controlled by the fourth pressurizing apparatus (8). For brevity, the foregoing cases are not described in detail again.

It should be noted that, when a pressurizing apparatus fails, the controller may select an alternative pressurizing apparatus according to a principle of "nearby selection", to improve braking efficiency and reduce control complexity. For example, the first pressurizing apparatus (5) and the second pressurizing apparatus (6) may substitute for each other, and the third pressurizing apparatus (8) and the fourth pressurizing apparatus (9) may substitute for each other. Certainly, a relatively distant pressurizing apparatus may be alternatively selected as a substitution. This is not limited in this embodiment of this application.

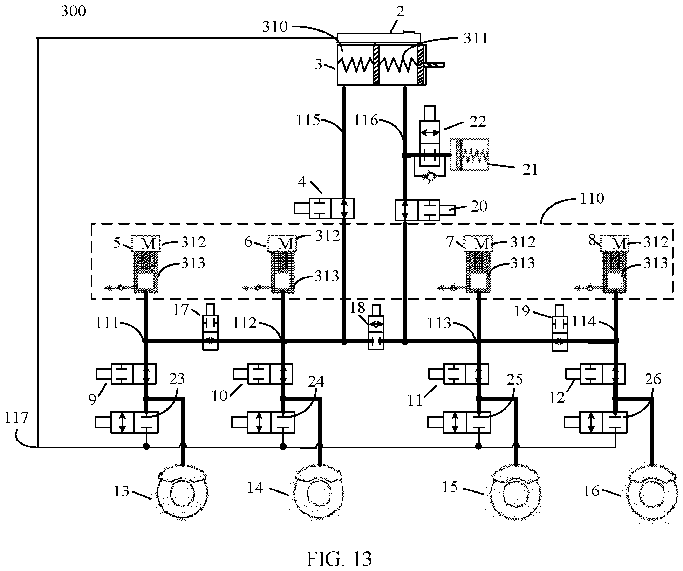

The foregoing describes the operating modes of the distributed braking system 200 in the embodiments of this application with reference to FIG. 5 to FIG. 12. The following describes operating modes of the distributed braking system 200 in the embodiments of this application with reference to FIG. 13 to FIG. 15. It should be understood that the operating modes of the two distributed controller systems are basically the same, and a main difference lies in different outlet modes. Therefore, the following describes only several main operating modes as examples. For remaining operating modes, refer to the foregoing descriptions of the operating modes of the distributed braking system 200.

It is assumed that the default states of the control valves in the distributed braking system 300 are as follows: The first control valve (17) and the second control valve (19) are normally open valves, the third control valve (18) is a normally closed valve, the inlet valves (9, 10, 11, 12) are normally open valves, the outlet valves (23, 24, 25, 26) are normally closed valves, the isolation valves (4, 20) are normally open valves, and the fourth control valve (22) is a normally closed valve.

FIG. 13 is a schematic diagram of an operating mode of the distributed braking system 300 according to an embodiment of this application. FIG. 13 shows a flow path of a brake fluid during pressurization when the distributed braking system 300 is in the brake-by-wire mode.

In the brake-by-wire mode, the controller controls the fourth control valve (22) to be in the open state, the isolation valves (4, 20) to be in the closed state, and all the remaining control valves to be in the default states.

When the driver presses down the brake pedal, the brake fluid in the brake master cylinder (3) flows into the pedal feel simulator (21) through the sixth brake circuit (116). Because the isolation valves (4, 20) are in the closed state, the brake fluid does not enter the brake wheel cylinders (9) through the fifth brake circuit (115) and the sixth brake circuit (116), thereby implementing braking decoupling between the brake master cylinder (3) and the brake wheel cylinders (13, 14, 15, 16).

Correspondingly, the controller determines a pedal stroke by using the pedal stroke sensor (410), and determines a required braking force based on the obtained pedal stroke. The controller controls the four pressurizing apparatuses (5, 6, 7, 8) to deliver brake fluids to the four brake wheel cylinders (13, 14, 15, 16) through the four brake circuits (111, 112, 113, 114) respectively, to generate braking forces for the wheels through the brake wheel cylinders and implement braking.

During braking, when pressure of the brake fluids in the brake circuits needs to be equalized, the controller may control the third control valve (18) to be in the open state, so that the brake fluids can flow between the second brake circuit (112) and the third brake circuit (113), and pressure of the brake fluids in the second brake circuit (112) and the third brake circuit (113) is equalized.

When strength for pressing down the brake pedal by the driver decreases or the driver does not fully release the brake pedal (the brake pedal is not shown in the figure), a braking requirement decreases. The controller may control, based on a pedal stroke detected by the pedal stroke sensor, motors (312) of the four pressurizing apparatuses (5, 6, 7, 8) to rotate reversely, to depressurize the braking system.

When the driver fully releases the brake pedal, on the one hand, the controller may control the four outlet valves (23, 24, 25, 26) to be in an open state. In this case, due to a pressure difference, the brake fluids in the brake wheel cylinders (13, 14, 15, 16) flow to the fluid storage apparatus (2) through the outlet circuit (117), to depressurize the braking system. On the other hand, the controller may further control the isolation valves (4, 20) to be in the open state. In this case, due to a pressure difference, the brake fluids in the brake wheel cylinders (13, 14, 15, 16) flow to the brake master cylinder (3) through the fifth brake circuit (115) and the sixth brake circuit (116). Finally, pressure of the brake fluids in the brake wheel cylinders is close to 0 or is 0.

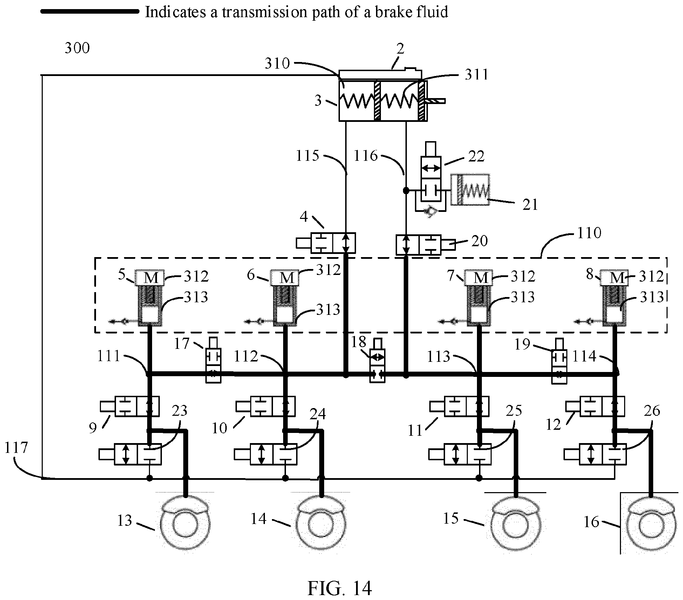

FIG. 14 is a schematic diagram of an operating mode of the distributed braking system 300 according to an embodiment of this application. FIG. 6 shows a flow path of a brake fluid during pressurization when the braking system 200 is in a self-driving mode. It should be noted that the flow path shown in FIG. 6 is similar to the flow path shown in FIG. 5. A main difference lies in that, in the brake-by-wire mode, operating of the braking system depends on an operation of the driver; however, in the self-driving mode, operating of the braking system may no longer depend on an operation of the driver.

In the self-driving mode, operating of the braking system no longer requires participation of the driver. Therefore, a braking force requirement may be sent by an advanced driving assistant system (advanced driving assistant system, ADAS) to the controller by using an instruction.

After the ADAS informs the controller of the braking force requirement, the controller controls the four pressurizing apparatuses (5, 6, 7, 8) to deliver brake fluids to the four brake wheel cylinders (13, 14, 15, 16) through the four brake circuits (111, 112, 113, 114) respectively, to generate braking forces for the wheels through the brake wheel cylinders and implement braking.

During braking, when pressure of the brake fluids in the brake circuits needs to be equalized, the controller may control the third control valve (18) to be in the open state, so that the brake fluids can flow between the second brake circuit (112) and the third brake circuit (113), and pressure of the brake fluids in the second brake circuit (112) and the third brake circuit (113) is equalized.

When the ADAS informs the controller of a braking force decrease requirement or a braking force requirement is 0, the controller may control the motors (312) of the four pressurizing apparatuses (5, 6, 7, 8) to rotate reversely, to depressurize the braking system.

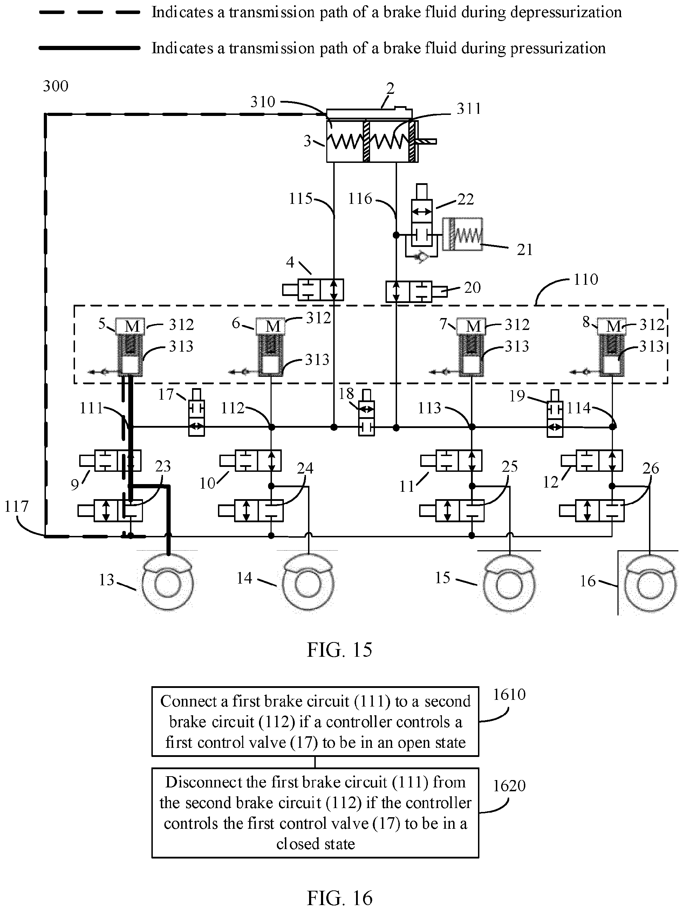

FIG. 15 is a schematic diagram of an operating mode of the distributed braking system 300 according to an embodiment of this application. FIG. 15 shows a flow path of a brake fluid during pressurization when the braking system 300 is in a single-wheel braking mode. The single-wheel braking mode may be used for functions such as ESC, an ABS, and a TCS.

After determining that the first brake wheel cylinder (13) needs to be pressurized, the controller controls the first control valve (17) to be in the closed state and the other control valves to be in the default states. The controller controls a motor (312) of the first pressurizing apparatus (5) to rotate forward to press a brake fluid into the first brake wheel cylinder (13) through the first brake circuit (111), to pressurize the first brake wheel cylinder (13).

After determining that the first brake wheel cylinder (13) needs to be depressurized, the controller controls the first control valve (17) to be in the closed state, and controls the first outlet valve (23) to be in the open state, and the other control valves to be in the default states. In this way, a brake fluid output by the first pressurizing apparatus (5) flows into the first outlet valve (23) through the first brake circuit (111), and flows to the fluid storage apparatus (2) through the first outlet valve (23) and the outlet circuit (117).

Optionally, in the foregoing depressurization process, the first inlet valve (9) may be controlled to be in the closed state, so that relatively high braking pressure can be maintained between the pressure inlet of the first inlet valve (9) and the pressure outlet of the first pressurizing apparatus (5). To be specific, in the first brake circuit (111) between the first inlet valve (9) and the first pressurizing apparatus (5), pressure of a brake fluid is kept in a relatively high state, and when the first brake wheel cylinder (13) needs to be pressurized again, a relatively quick response can be made.

It should be noted that the flow path shown in FIG. 15 is described by using an example of adjusting the braking force for the first brake wheel cylinder (13). Adjustment on the braking forces for the other brake wheel cylinders is similar. For brevity, details are not described with reference to the accompanying drawings again.

The foregoing describes the distributed braking system and the automobile in the embodiments of this application with reference to FIG. 1 to FIG. 15. The following describes a control method provided in an embodiment of this application with reference to FIG. 16. The control method shown in FIG. 16 may be used in combination with the foregoing various distributed braking systems.

FIG. 16 is a flowchart of a control method for a distributed braking system in an automobile according to an embodiment of this application. The method shown in FIG. 16 may be performed by a controller of the distributed braking system. The method shown in FIG. 16 includes step 1610 and step 1620.

1610. Connect a first brake circuit (111) to a second brake circuit (112) if the controller controls a first control valve (17) to be in an open state.

1620. Disconnect the first brake circuit (111) from the second brake circuit (112) if the controller controls the first control valve (17) to be in a closed state.

Usually, to improve reliability of the distributed braking system, the method further includes: When the controller determines that a first pressurizing apparatus (5) or a second pressurizing apparatus (6) fails, the controller controls the first control valve (17) to be in the open state, so that the first brake circuit (111) is connected to the second brake circuit (112).

It should be noted that there are many manners of detecting a failure of a pressurizing apparatus. This is not specifically limited in this application. For example, when preparing to pressurize a first brake wheel cylinder (13), the controller may control the first control valve (17) to be in the closed state, and then the controller detects an acceleration of a wheel corresponding to the first brake wheel cylinder (13), to determine whether the first pressurizing apparatus (5) fails. When the acceleration of the wheel has almost no significant increase within a specific time, or varies relatively greatly from an expected normal case, the controller may determine that the first pressurizing apparatus (5) fails; or on the contrary, the first pressurizing apparatus (5) operates properly.

Optionally, if the first control valve (17) is in the open state, the first pressurizing apparatus (5) is configured to adjust pressure of a brake fluid in the first brake circuit (111), to adjust pressure of a brake fluid in the second brake circuit (112); and/or if the first control valve (17) is in the open state, the second pressurizing apparatus (6) is configured to adjust the pressure of the brake fluid in the second brake circuit (112), to adjust the pressure of the brake fluid in the second brake circuit (111).

Optionally, the method further includes: The controller determines that a third pressurizing apparatus (7) or a fourth pressurizing apparatus (8) fails; and the controller controls a second control valve (19) to be in an open state, so that a third brake circuit (113) is connected to a fourth brake circuit (114). In this way, a pressurizing apparatus, of the third pressurizing apparatus (7) and the fourth pressurizing apparatus (8), that operates properly may provide a braking force for a third brake wheel cylinder (15) and/or a fourth brake wheel cylinder (16) through the connected third brake circuit (113) and fourth brake circuit (114).

In this way, when the third pressurizing apparatus (7) or the fourth pressurizing apparatus (8) fails, the first pressurizing apparatus (5) and the second pressurizing apparatus (6) may be used to substitute for the third pressurizing apparatus (7) or the fourth pressurizing apparatus (8), and provide a braking force for the third brake wheel cylinder (15) or the fourth brake wheel cylinder (16).

It should be noted that, in case of the foregoing failure, isolation valves (4, 20) may be controlled to be in a closed state to prevent brake fluids from flowing back to a brake master cylinder through a fifth brake circuit (115) and a sixth brake circuit (116).

Optionally, the method further includes: When determining that both the first pressurizing apparatus (5) and the second pressurizing apparatus (6) fail and braking forces need to be provided for a second brake wheel cylinder (14) and the first brake wheel cylinder (13), the controller may control a third control valve (18) to be in an open state, so that the third pressurizing apparatus (7) and/or the fourth pressurizing apparatus (8) provide/provides braking forces for the second brake wheel cylinder (14) and the first brake wheel cylinder (13).

When both the first pressurizing apparatus (5) and the second pressurizing apparatus (6) fail, if the fourth pressurizing apparatus (8) needs to provide braking forces for the first brake wheel cylinder (13) and the second brake wheel cylinder (14), the second control valve (19) needs to be in the open state. In this way, the fourth pressurizing apparatus (8) is configured to adjust pressure of brake fluids in the connected fourth brake circuit (114) and third brake circuit (113), to provide braking forces for the first brake wheel cylinder (13) and the second brake wheel cylinder (14). Certainly, when only the third pressurizing apparatus (7) needs to provide braking forces for the first brake wheel cylinder (13) and the second brake wheel cylinder (14), the second control valve (19) may be in a closed state.

It should be noted that, in case of the foregoing failure, the isolation valves (4, 20) may be controlled to be in a closed state to prevent the brake fluids from flowing back to the brake master cylinder (3) through the fifth brake circuit (115) and the sixth brake circuit (116).

When both the first pressurizing apparatus (5) and the second pressurizing apparatus (6) fail, the controller controls the first control valve (17) to be in the open state, so that the first brake circuit (111) is connected to the second brake circuit (112). In this way, the third pressurizing apparatus (7) and/or the fourth pressurizing apparatus (8) may be used to substitute for the first pressurizing apparatus (5) and the second pressurizing apparatus (6), and provide a braking force for the first brake wheel cylinder (13) or the second brake wheel cylinder (14).

Optionally, the method further includes: The controller determines that the third pressurizing apparatus (7) and the fourth pressurizing apparatus (8) fail; and the controller controls the third control valve (18) to be in the open state, so that the second brake circuit (112) is connected to the third brake circuit (113). In this way, the first pressurizing apparatus (5) or the second pressurizing apparatus (6) may provide a braking force for the third brake wheel cylinder (15) and/or the fourth brake wheel cylinder (16) through the connected third brake circuit (113) and fourth brake circuit (114).

When both the third pressurizing apparatus (7) and the fourth pressurizing apparatus (8) fail, if the first pressurizing apparatus (5) needs to provide braking forces for the third brake wheel cylinder (15) and the fourth brake wheel cylinder (16), the first control valve (17) needs to be in the open state. In this way, the first pressurizing apparatus (5) is configured to adjust pressure of brake fluids in the connected first brake circuit (111) and second brake circuit (112), to provide braking forces for the third brake wheel cylinder (15) and the fourth brake wheel cylinder (16). Certainly, when only the second pressurizing apparatus (6) needs to provide braking forces for the third brake wheel cylinder (15) and the fourth brake wheel cylinder (16), the first control valve (17) may be in the closed state.

It should be noted that, in case of the foregoing failure, the isolation valves (4, 20) may be controlled to be in a closed state to prevent the brake fluids from flowing back to the brake master cylinder (3) through the fifth brake circuit (115) and the sixth brake circuit (116).

When both the third pressurizing apparatus (7) and the fourth pressurizing apparatus (8) fail, the controller controls the second control valve (19) to be in the open state, so that the third brake circuit (113) is connected to the fourth brake circuit (114). In this way, the first pressurizing apparatus (5) and/or the second pressurizing apparatus (6) may be used to substitute for the third pressurizing apparatus (7) and the fourth pressurizing apparatus (8), and provide a braking force for the third brake wheel cylinder (15) or the fourth brake wheel cylinder (16).

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and other division may be used during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A distributed braking system in an automobile, wherein the distributed braking system comprises a first pressurizing apparatus (5), a second pressurizing apparatus (6), and a first control valve (17);
the first pressurizing apparatus (5) is configured to adjust pressure of a brake fluid in a first brake circuit (111), to control a braking force applied to a first brake wheel cylinder (13) of the automobile;
the second pressurizing apparatus (6) is configured to adjust pressure of a brake fluid in a second brake circuit (112), to control a braking force applied to a second brake wheel cylinder (14) of the automobile;
the first control valve (17) connects the first brake circuit (111) to the second brake circuit (112), and the first brake circuit (111) is connected to the second brake circuit (112) if the first control valve (17) is in an open state, or the first brake circuit (111) is disconnected from the second brake circuit (112) if the first control valve (17) is in a closed state; and
the first brake wheel cylinder (13) is a brake wheel cylinder for a right front wheel of the automobile, and the second brake wheel cylinder (14) is a brake wheel cylinder for a left front wheel of the automobile; or
the first brake wheel cylinder (13) is a brake wheel cylinder for a right rear wheel of the automobile, and the second brake wheel cylinder (14) is a brake wheel cylinder for a left rear wheel of the automobile; or
the first brake wheel cylinder (13) is a brake wheel cylinder for a right rear wheel of the automobile, and the second brake wheel cylinder (14) is a brake wheel cylinder for a left front wheel of the automobile; or
the first brake wheel cylinder (13) is a brake wheel cylinder for a right front wheel of the automobile, and the second brake wheel cylinder (14) is a brake wheel cylinder for a left rear wheel of the automobile.

2. The distributed braking system according to claim 1, wherein if the first control valve (17) is in the open state, the first pressurizing apparatus (5) is configured to adjust the pressure of the brake fluid in the first brake circuit (111), to adjust the pressure of the brake fluid in the second brake circuit (112); and/or
if the first control valve is in the open state, the second pressurizing apparatus (6) is configured to adjust the pressure of the brake fluid in the first brake circuit (111), to adjust the pressure of the brake fluid in the second brake circuit (112).

3. The distributed braking system according to claim 1 or 2, wherein the distributed braking system further comprises a second control valve (19), a third pressurizing apparatus (7), and a fourth pressurizing apparatus (8);
the third pressurizing apparatus (7) is configured to adjust pressure of a brake fluid in a third brake circuit (113), to control a braking force applied to a third brake wheel cylinder (15);
the fourth pressurizing apparatus (8) is further configured to adjust pressure of a brake fluid in a fourth brake circuit (114), to control a braking force applied to a fourth brake wheel cylinder (16);
the second control valve (19) connects the third brake circuit (113) to the fourth brake circuit (114), and the third brake circuit (113) is connected to the fourth brake circuit (114) if the second control valve (19) is in an open state, or the third brake circuit (113) is disconnected from the fourth brake circuit (114) if the second control valve (19) is in a closed state; and
the third brake wheel cylinder (15), the fourth brake wheel cylinder (16), the first brake wheel cylinder (13), and the second brake wheel cylinder (14) are configured to provide braking forces for different wheels in the automobile, the third brake wheel cylinder (15) is a brake wheel cylinder for the right rear wheel of the automobile, and the fourth brake wheel cylinder (16) is a brake wheel cylinder for the left rear wheel of the automobile; or
the third brake wheel cylinder (15) is a brake wheel cylinder for the right front wheel of the automobile, and the fourth brake wheel cylinder (16) is a brake wheel cylinder for the left front wheel of the automobile; or
the third brake wheel cylinder (15) is a brake wheel cylinder for the right front wheel of the automobile, and the fourth brake wheel cylinder (16) is a brake wheel cylinder for the left rear wheel of the automobile; or
the third brake wheel cylinder (15) is a brake wheel cylinder for the left front wheel of the automobile, and the fourth brake wheel cylinder (16) is a brake wheel cylinder for the right rear wheel of the automobile.

4. The distributed braking system according to claim 3, wherein if the second control valve (19) is in the open state, the third pressurizing apparatus (7) is configured to adjust the pressure of the brake fluid in the third brake circuit (113), to adjust the pressure of the brake fluid in the fourth brake circuit (114); and/or
if the second control valve (19) is in the open state, the fourth pressurizing apparatus (8) is configured to adjust the pressure of the brake fluid in the fourth brake circuit (114), to adjust the pressure of the brake fluid in the third brake circuit (113).

5. The distributed braking system according to claim 3 or 4, wherein the distributed braking system further comprises a third control valve (18), a fifth brake circuit (115), and a sixth brake circuit (116), a pressure outlet of the fifth brake circuit (115) is connected to a pressure inlet of the first brake circuit (111), the pressure outlet of the fifth brake circuit (115) is connected to a pressure inlet of the second brake circuit (112), a pressure outlet of the sixth brake circuit (116) is connected to a pressure inlet of the third brake circuit (113), and the pressure outlet of the sixth brake circuit (116) is connected to a pressure inlet of the fourth brake circuit (114); and
the third control valve (18) is configured to connect the second brake circuit (112) to the third brake circuit (113), and the second brake circuit (112) is connected to the third brake circuit (113) if the third control valve (18) is in an open state, or the second brake circuit (112) is disconnected from the third brake circuit (113) if the third control valve (18) is in a closed state.

6. The distributed braking system according to claim 5, wherein the distributed braking system further comprises a brake master cylinder (3), and the brake master cylinder (3) is configured to adjust pressure of a brake fluid in the fifth brake circuit (115), to adjust the pressure of the brake fluid in the first brake circuit (111) or the second brake circuit (112); and
the brake master cylinder (3) is further configured to adjust pressure of a brake fluid in the sixth brake circuit (116), to adjust the pressure of the brake fluid in the third brake circuit (113) or the fourth brake circuit (114).

7. An automobile, wherein the automobile comprises a first brake wheel cylinder (13), a second brake wheel cylinder (14), a first control valve (17), a first pressurizing apparatus (5), and a second pressurizing apparatus (6);
the first pressurizing apparatus (5) is configured to adjust pressure of a brake fluid in a first brake circuit (111), to control a braking force applied to the first brake wheel cylinder (13);
the second pressurizing apparatus (6) is configured to adjust pressure of a brake fluid in a second brake circuit (112), to control a braking force applied to the second brake wheel cylinder (14);
the first control valve (17) connects the first brake circuit (111) to the second brake circuit (112), and the first brake circuit (111) is connected to the second brake circuit (112) if the first control valve (17) is in an open state, or the first brake circuit (111) is disconnected from the second brake circuit (112) if the first control valve (17) is in a closed state; and
the first brake wheel cylinder (13) is a brake wheel cylinder for a right front wheel of the automobile, and the second brake wheel cylinder (14) is a brake wheel cylinder for a left front wheel of the automobile; or
the first brake wheel cylinder (13) is a brake wheel cylinder for a right rear wheel of the automobile, and the second brake wheel cylinder (14) is a brake wheel cylinder for a left rear wheel of the automobile; or
the first brake wheel cylinder (13) is a brake wheel cylinder for a right rear wheel of the automobile, and the second brake wheel cylinder (14) is a brake wheel cylinder for a left front wheel of the automobile; or
the first brake wheel cylinder (13) is a brake wheel cylinder for a right front wheel of the automobile, and the second brake wheel cylinder (14) is a brake wheel cylinder for a left rear wheel of the automobile.

8. The automobile according to claim 7, wherein if the first control valve (17) is in the open state, the first pressurizing apparatus (5) is configured to adjust the pressure of the brake fluid in the first brake circuit (111), to adjust the pressure of the brake fluid in the second brake circuit (112); and/or
if the first control valve is in the open state, the second pressurizing apparatus (6) is configured to adjust the pressure of the brake fluid in the first brake circuit (111), to adjust the pressure of the brake fluid in the second brake circuit (112).

9. The automobile according to claim 7 or 8, wherein the automobile further comprises a third brake wheel cylinder (15), a fourth brake wheel cylinder (16), a second control valve (19), a third pressurizing apparatus (7), and a fourth pressurizing apparatus (8);
the third pressurizing apparatus (7) is configured to adjust pressure of a brake fluid in a third brake circuit (113), to control a braking force applied to the third brake wheel cylinder (15);
the fourth pressurizing apparatus (8) is further configured to adjust pressure of a brake fluid in a fourth brake circuit (114), to control a braking force applied to the fourth brake wheel cylinder (16);
the second control valve (19) connects the third brake circuit (113) to the fourth brake circuit (114), and the third brake circuit (113) is connected to the fourth brake circuit (114) if the second control valve (19) is in an open state, or the third brake circuit (113) is disconnected from the fourth brake circuit (114) if the second control valve (19) is in a closed state; and
the third brake wheel cylinder (15), the fourth brake wheel cylinder (16), the first brake wheel cylinder (13), and the second brake wheel cylinder (14) are configured to provide braking forces for different wheels in the automobile, the third brake wheel cylinder (15) is a brake wheel cylinder for the right rear wheel of the automobile, and the fourth brake wheel cylinder (16) is a brake wheel cylinder for the left rear wheel of the automobile; or
the third brake wheel cylinder (15) is a brake wheel cylinder for the right front wheel of the automobile, and the fourth brake wheel cylinder (16) is a brake wheel cylinder for the left front wheel of the automobile; or
the third brake wheel cylinder (15) is a brake wheel cylinder for the right front wheel of the automobile, and the fourth brake wheel cylinder (16) is a brake wheel cylinder for the left rear wheel of the automobile; or
the third brake wheel cylinder (15) is a brake wheel cylinder for the left front wheel of the automobile, and the fourth brake wheel cylinder (16) is a brake wheel cylinder for the right rear wheel of the automobile.

10. The automobile according to claim 9, wherein if the second control valve (19) is in the open state, the third pressurizing apparatus (7) is configured to adjust the pressure of the brake fluid in the third brake circuit (113), to adjust the pressure of the brake fluid in the fourth brake circuit (114); and/or
if the second control valve (19) is in the open state, the fourth pressurizing apparatus (8) is configured to adjust the pressure of the brake fluid in the fourth brake circuit (114), to adjust the pressure of the brake fluid in the third brake circuit (113).

11. The automobile according to claim 9 or 10, wherein a distributed braking system further comprises a third control valve (18), a fifth brake circuit (115), and a sixth brake circuit (116), a pressure outlet of the fifth brake circuit (115) is connected to a pressure inlet of the first brake circuit (111), the pressure outlet of the fifth brake circuit (115) is connected to a pressure inlet of the second brake circuit (112), a pressure outlet of the sixth brake circuit (116) is connected to a pressure inlet of the third brake circuit (113), and the pressure outlet of the sixth brake circuit (116) is connected to a pressure inlet of the fourth brake circuit (114); and
the third control valve (18) is configured to connect the second brake circuit (112) to the third brake circuit (113), and the second brake circuit (112) is connected to the third brake circuit (113) if the third control valve (18) is in an open state, or the second brake circuit (112) is disconnected from the third brake circuit (113) if the third control valve (18) is in a closed state.

12. The automobile according to claim 11, wherein the automobile further comprises a brake pedal (1), the distributed braking system further comprises a brake master cylinder (3), and the brake pedal (1) is configured to receive a pedaling force input by a driver, and push a piston in the brake master cylinder (3) to produce displacement with respect to a cylinder body of the brake master cylinder (3); and
the brake master cylinder (3) is configured to:
determine pressure of a brake fluid in the fifth brake circuit (115) based on the displacement;
adjust the pressure of the brake fluid in the fifth brake circuit (115), to adjust the pressure of the brake fluid in the first brake circuit (111) or the second brake circuit (112); and
adjust pressure of a brake fluid in the sixth brake circuit (116), to adjust the pressure of the brake fluid in the third brake circuit (113) or the fourth brake circuit (114).

13. A control method for a distributed braking system in an automobile, wherein the distributed braking system comprises a controller, a first control valve (17), a first pressurizing apparatus (5), and a second pressurizing apparatus (6);
the first pressurizing apparatus (5) is configured to adjust pressure of a brake fluid in a first brake circuit (111), to control a braking force applied to a first brake wheel cylinder (13) of the automobile;
the second pressurizing apparatus (6) is configured to adjust pressure of a brake fluid in a second brake circuit (112), to control a braking force applied to a second brake wheel cylinder (14) of the automobile;
the first control valve (17) connects the first brake circuit (111) to the second brake circuit (112); and
the first brake wheel cylinder (13) is a brake wheel cylinder for a right front wheel of the automobile, and the second brake wheel cylinder (14) is a brake wheel cylinder for a left front wheel of the automobile; or
the first brake wheel cylinder (13) is a brake wheel cylinder for a right rear wheel of the automobile, and the second brake wheel cylinder (14) is a brake wheel cylinder for a left rear wheel of the automobile; or
the first brake wheel cylinder (13) is a brake wheel cylinder for a right rear wheel of the automobile, and the second brake wheel cylinder (14) is a brake wheel cylinder for a left front wheel of the automobile; or
the first brake wheel cylinder (13) is a brake wheel cylinder for a right front wheel of the automobile, and the second brake wheel cylinder (14) is a brake wheel cylinder for a left rear wheel of the automobile; and
the method comprises:
connecting the first brake circuit (111) to the second brake circuit (112) if the controller controls the first control valve (17) to be in an open state; or
disconnecting the first brake circuit (111) from the second brake circuit (112) if the controller controls the first control valve (17) to be in a closed state.

14. The method according to claim 13, wherein the method further comprises:
determining, by the controller, that the first pressurizing apparatus (5) or the second pressurizing apparatus (6) fails; and
controlling, by the controller, the first control valve (17) to be in the open state.

15. The method according to claim 13 or 14, wherein if the first control valve (17) is in the open state, the first pressurizing apparatus (5) is configured to adjust the pressure of the brake fluid in the first brake circuit (111), to adjust the pressure of the brake fluid in the second brake circuit (112); and/or
if the first control valve is in the open state, the second pressurizing apparatus (6) is configured to adjust the pressure of the brake fluid in the first brake circuit (111), to adjust the pressure of the brake fluid in the second brake circuit (112).

16. The method according to any one of claims 13 to 15, wherein the distributed braking system further comprises a second control valve (19), a third pressurizing apparatus (7), and a fourth pressurizing apparatus (8);
the third pressurizing apparatus (7) is configured to adjust pressure of a brake fluid in a third brake circuit (113), to control a braking force applied to a third brake wheel cylinder (15);
the fourth pressurizing apparatus (8) is further configured to adjust pressure of a brake fluid in a fourth brake circuit (114), to control a braking force applied to a fourth brake wheel cylinder (16);
the second control valve (19) connects the third brake circuit (113) to the fourth brake circuit (114); and
the third brake wheel cylinder (15), the fourth brake wheel cylinder (16), the first brake wheel cylinder (13), and the second brake wheel cylinder (14) are configured to provide braking forces for different wheels in the automobile, the third brake wheel cylinder (15) is a brake wheel cylinder for the right rear wheel of the automobile, and the fourth brake wheel cylinder (16) is a brake wheel cylinder for the left rear wheel of the automobile; or
the third brake wheel cylinder (15) is a brake wheel cylinder for the right front wheel of the automobile, and the fourth brake wheel cylinder (16) is a brake wheel cylinder for the left front wheel of the automobile; or
the third brake wheel cylinder (15) is a brake wheel cylinder for the right front wheel of the automobile, and the fourth brake wheel cylinder (16) is a brake wheel cylinder for the left rear wheel of the automobile; or
the third brake wheel cylinder (15) is a brake wheel cylinder for the left front wheel of the automobile, and the fourth brake wheel cylinder (16) is a brake wheel cylinder for the right rear wheel of the automobile; and
the method further comprises:
connecting the third brake circuit (113) to the fourth brake circuit (114) if the controller controls the second control valve (19) to be in an open state; or
disconnecting the third brake circuit (113) from the fourth brake circuit (114) if the controller controls the second control valve (19) to be in a closed state.

17. The method according to claim 16, wherein the method comprises:
determining, by the controller, that the third pressurizing apparatus (7) or the fourth pressurizing apparatus (8) fails; and
controlling, by the controller, the second control valve (19) to be in the open state.

18. The method according to claim 16 or 17, wherein if the second control valve (19) is in the open state, the third pressurizing apparatus (7) is configured to adjust the pressure of the brake fluid in the third brake circuit (113), to adjust the pressure of the brake fluid in the fourth brake circuit (114); and/or
if the second control valve (19) is in the open state, the fourth pressurizing apparatus (8) is configured to adjust the pressure of the brake fluid in the fourth brake circuit (114), to adjust the pressure of the brake fluid in the third brake circuit (113).

19. The method according to any one of claims 16 to 18, wherein the distributed braking system further comprises a third control valve (18), a fifth brake circuit (115), and a sixth brake circuit (116), a pressure outlet of the fifth brake circuit (115) is connected to a pressure inlet of the first brake circuit (111), the pressure outlet of the fifth brake circuit (115) is connected to a pressure inlet of the second brake circuit (112), a pressure outlet of the sixth brake circuit (116) is connected to a pressure inlet of the third brake circuit (113), and the pressure outlet of the sixth brake circuit (116) is connected to a pressure inlet of the fourth brake circuit (114); and
the third control valve (18) is configured to connect the second brake circuit (112) to the third brake circuit (113); and
the method further comprises:
connecting the second brake circuit (112) to the third brake circuit (113) if the controller controls the third control valve (18) to be in an open state; or
disconnecting the second brake circuit (112) from the third brake circuit (113) if the controller controls the third control valve (18) to be in a closed state.

20. The method according to claim 19, wherein the method further comprises:
determining, by the controller, that the first pressurizing apparatus (5) and the second pressurizing apparatus (6) fail; and
controlling, by the controller, the third control valve (18) to be in the open state.

21. The method according to claim 20, wherein the method further comprises:
if the first pressurizing apparatus (5) and the second pressurizing apparatus (6) fail, controlling, by the controller, the first control valve (17) to be in the open state, so that the first brake circuit (111) is connected to the second brake circuit (112).

22. The method according to claim 19, wherein the method further comprises:
determining, by the controller, that the third pressurizing apparatus (7) and the fourth pressurizing apparatus (8) fail; and
controlling, by the controller, the third control valve (18) to be in the open state, so that the second brake circuit (112) is connected to the third brake circuit (113).

23. The method according to claim 22, wherein the method further comprises:
if the third pressurizing apparatus (7) and the fourth pressurizing apparatus (8) fail, controlling, by the controller, the second control valve (19) to be in the open state, so that the third brake circuit (113) is connected to the fourth brake circuit (114).

24. The method according to any one of claims 19 to 23, wherein the automobile further comprises a brake master cylinder (3), and the brake master cylinder (3) is configured to adjust pressure of a brake fluid in the fifth brake circuit (115), to adjust the pressure of the brake fluid in the first brake circuit (111) and/or the second brake circuit (112); and
the brake master cylinder (3) is further configured to adjust pressure of a brake fluid in the sixth brake circuit (116), to adjust the pressure of the brake fluid in the third brake circuit (113) and/or the fourth brake circuit (114).
